# EUROPEAN PATENT APPLICATION

(11) **EP 1 905 784 A1**
(43) Date of publication of application: **02.04.2008**
(21) Application number: 07019036.8
(22) Date of filing: 27.09.2007
(51) Int. Cl.: C08F 8/42, C08K 5/5455, C08K 5/544, C08K 5/5415

(54) **Hydrophilic film forming composition and hydrophilic member**

(30) Priority: 29.09.2006 JP 2006269719; 29.09.2006 JP 2006269720
(71) Applicant: FUJIFILM Corporation, Minato-ku Tokyo 106-8620 (JP)
(72) Inventor: Yamasaki, Sumiaki, Ashigarakami-gun Kanagawa (JP); Hoshi, Satoshi, Ashigarakami-gun Kanagawa (JP)
(74) Representative: HOFFMANN EITLE

(57) **Abstract**

A hydrophilic film forming composition includes (A) a hydrophilic polymer having a silane coupling group at the terminal thereof; (B) an alkoxide compound of an element selected from Si, Ti, Zr and Al; and (C) a compound selected from a compound (C-1) and a compound (C-2), wherein the compound (C-1) has at least one silane coupling group and at least one acidic group or its salt in the molecule thereof, and the compound (C-2) has at least one functional group that reacts with a hydrolysate of a silane coupling group or with a hydrolytic condensate of a metal alkoxide and at least one acidic group or its salt in the molecule thereof.

## Description

### Background of the Invention

### 1. Field of the Invention

The present invention relates to a hydrophilic film forming composition and a surface hydrophilic member. Precisely, the invention relates to a hydrophilic film forming composition capable of giving a hydrophilic surface layer having excellent hydrophilicity, durability, transparency and storage stability, and to a surface hydrophilic member having the hydrophilic surface layer.

### 2. Description of the Related Art

Products and members having a resin film surface are widely used in various fields, as worked and functionalized in accordance with their object. Because of the intrinsic characteristics of resin, their surfaces are generally hydrophobic or oleophilic. Accordingly, when pollutants such as oily matter adhere to the surface, they could not be readily removed; and when having accumulated thereon, then they may greatly worsen the functions and the characteristics of the products and the members having the surface. Regarding products and members exposed to high-humidity condition or to rain, those having a transparent function have a problem in that, when water drops adhere to them, then the light transmittance through them is lowered owing to diffused reflection of light on them. Products and members having an inorganic surface such as glass or metal are not satisfactory in point of their soiling resistance to adhesion of pollutants such as oily matter to them, and even in point of their fogging resistance to adhesion of water drops thereto. In particular, glass for vehicles and glass for buildings have a problem in that, when hydrophobic pollutants, for example, combustion products such as carbon black in city dust and exhaust gas by vehicles, and also oils and fats and ingredients released from sealants adhere to them and when water drops adhere to them, then it is often difficult to secure view through the glass (or reflected on mirrors); and therefore, it is strongly desired to give functions of soiling resistance and fogging resistance to the glass for those uses.

From the viewpoint of soiling resistance and assuming that the pollutants may be organic substances such as oily matter, it is necessary to reduce the interaction between the material surface and the pollutants for preventing the material surface from being soiled, or that is, it is necessary to make the material surface have hydrophilicity or oil repellency. Regarding the fogging resistance thereof, it is necessary to make the material surface have spreadable wettability (that is, hydrophilicity) capable of uniformly spreading the adhering water drops on the surface, or to make it have water repellency capable of readily removing the adhering water drops from it. Accordingly, many of the anti-soiling and anti-fogging materials now under investigation in the art depend on treatment for hydrophilication or for water repellency/oil repellency.

According to conventional methods of surface treatment for hydrophilication heretofore proposed in the art, for example, etching treatment or plasma treatment, the treated surface may be hydrophilicated to a high degree, but the effect of the treatment is temporary and the treated surface could not keep the hydrophilicated condition for a long period of time. A surface hydrophilic coating film is proposed, using a hydrophilic graft polymer as one example of a hydrophilic resin (Article of Daily Newspaper Chemical Industry, January 30, 1995). According to this report, the coating film could be hydrophilicated in some degree, but its affinity to substrates is not sufficient, and a coating film having higher durability is desired.

As a member having a surface hydrophilic function, heretofore known is utilization of titanium oxide as a photocatalyst. This is based on the function of oxidatively decomposing organic substances and the function of hydrophilication through exposure to light; and for example, WO96/29375 discloses a technique that, when a photocatalyst-containing layer is formed on the surface of a substrate, then the surface may be hydrophilicated to a high degree in accordance with the optical excitation of the photocatalyst, reporting that, when this technique is applied to various composite materials such as glass, lenses, mirrors, exterior materials and water supply members, then it may give excellent functions of fogging resistance and soiling resistance to those composite materials. A member constructed by coating the surface of glass with titanium oxide is used as a self-cleaning material for windowpanes for buildings and for windshields for vehicles; however, in order that it may express its function of soiling resistance and fogging resistance, then it must be exposed to sunlight for a long period of time. Accordingly, owing to accumulation of soil on it with the lapse of long time, the deterioration of its properties is inevitable. In addition, the film strength is not always satisfactory, and the durability of the film must be improved. A self-cleaning film that comprises a titanium oxide layer formed on a plastic substrate is used for side-view mirrors for vehicles; however, it also could not have a sufficient film strength, and therefore a hydrophilic material having better abrasion resistance is desired.

On the other hand, as an anti-soiling and anti-fogging material based on its water repellency and oil repellency, essentially used are a silicone compound and a fluorine compound. For example, a soiling-resistant material in which the surface of the substrate is coated with a silanol-terminated organopolysiloxane is disclosed in JP-A 4-338901; a material that comprises a polyfluoroalkyl group-having silane compound is disclosed in JP-B 6-29332; and a member that comprises a copolymer of a perfluoroacrylate and an alkoxysilane group-having monomer formed on a thin optical film of essentially silicon dioxide is disclosed in JP-A 7-16940. However, these anti-soiling materials comprising such a silicone compound and a fluorine compound are unsatisfactory in point of their soiling resistance, and therefore soils with fingerprints, sebum, sweat, cosmetics and the like are difficult to remove from them; and the surface treatment with a compound having low surface energy such as fluorine or silicone is problematic in that the function may lower with time. Accordingly, it is desired to develop an anti-soiling and anti-fogging member having excellent durability.

### Summary of the Invention

An object of the invention is to provide a hydrophilic film forming composition capable of giving a hydrophilic film (hereinafter this may be referred to as a "hydrophilic layer") having excellent hydrophilicity (high surface energy, fogging resistance, soiling resistance), excellent durability, and excellent transparency and storage stability, and also to provide a surface hydrophilic member having a hydrophilic layer formed of the composition.

We, the present inventors have assiduously studied and, as a result, have found that the above problems may be solved by a coating film formed by crosslinking and curing a hydrophilic film forming composition (hereinafter this may be referred to simply as "composition") that contains a specific hydrophilic polymer, a specific metal alkoxide compound and a specific hydrophilic compound, and have completed the present invention.

Specifically, the hydrophilic film forming composition of the invention is characterized by containing (A) a hydrophilic polymer having a silane coupling group at the terminal thereof [this may be hereinafter referred to as a specific hydrophilic polymer (A)], (B) an alkoxide compound of an element selected from Si, Ti, Zr and Al [this may be hereinafter referred to as a specific alkoxide (B)], and (C) a compound having at least one silane coupling group and at least one acidic group or its salt in the molecule thereof [this may be hereinafter referred to as a specific hydrophilic compound (C-1)] or a compound having at least one functional group that reacts with a hydrolysate of a silane coupling group or with a hydrolytic condensate of a metal alkoxide and at least one acidic group or its salt in the molecule thereof [this may be hereinafter referred to as a specific hydrophilic compound (C-2)].

Preferably, the hydrophilic film forming composition further contains (D) colloidal silica, from the viewpoint of improving the hydrophilicity of the hydrophilic member formed of the composition.

The specific hydrophilic compound (C-1) in the invention is a compound having at least one silane coupling group and at least one acidic group or its salt in the molecule thereof, and is preferably represented by the following general formula (3):

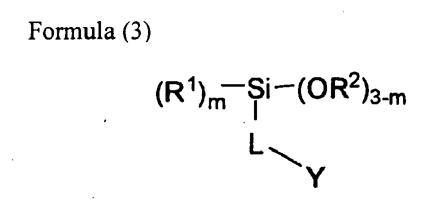

In formula (3), R² represents a hydrogen atom, an alkyl group or an aryl group; R¹ represents an alkyl group or an aryl group; L represents a single bond or an organic linking group; Y represents a sulfonic acid (salt), a carboxylic acid (salt), a phosphonic acid (salt), or a phosphoric acid (salt); m indicates an integer of 0 or 1.

Though not clear, the mechanism of forming a film of high hydrophilicity by the use of the specific hydrophilic compound (C-1) may be presumed as follows: Since the compound has a silane group, it may be taken into the silane coupling group-terminated hydrophilic polymer (A) and into the hydrolyzed polycondensate of the specific alkoxide (B) coexisting as a crosslinking component, and in addition, owing to the hydrophilic group Y, the formed film may express high hydrophilicity. In general, in forming a hydrophilic film, a large amount of a crosslinking agent must be added to the reaction system for curing the formed hydrophilic film; and therefore the film could hardly keep its high hydrophilicity. However, since the above specific hydrophilic compound (C-1) is in the composition of the invention, the film formed may satisfy both good film strength and high hydrophilicity.

The specific hydrophilic compound (C-2) in the invention is a compound having at least one functional group that reacts with a hydrolytic condensate of a silane coupling group or with a hydrolytic condensate of a metal alkoxide and at least one acidic group or its salt in the molecule thereof, and this includes a carboxylic acid (salt) compound, a sulfonic acid (salt) compound, a phosphonic acid (salt) compound and a phosphoric acid (salt) compound that contain a functional group capable of reacting with a hydrolytic condensate of a silane coupling group or with a hydrolytic condensate of a metal alkoxide.

Though not clear, the mechanism of forming a film of high hydrophilicity by the use of the specific hydrophilic compound (C-2) may be presumed as follows: Since the compound has a functional group that reacts with a hydrolytic condensate of a silane coupling group or with a hydrolytic condensate of a metal alkoxide, it may be taken into the silane coupling group-terminated hydrophilic polymer (A) and into the hydrolyzed polycondensate of the specific alkoxide (B) coexisting as a crosslinking component thereby increasing the strength of the film formed of the composition, and in addition, owing to the acidic group or its salt existing in the molecule, the formed film may express high hydrophilicity.

In the invention, the formed film may express high hydrophilicity owing to the silane coupling group-terminated hydrophilic polymer (A), and in addition, since it contains the specific hydrophilic compound (C-1) or (C-2), it may express further increased high hydrophilicity.

The hydrophilic member of the invention may be constructed by applying the above hydrophilic film forming composition onto a substrate.

### Detailed Description of the Invention

The hydrophilic film forming composition of the invention is characterized by containing (A) a hydrophilic polymer having a silane coupling group at the terminal thereof, (B) an alkoxide compound of an element selected from Si, Ti, Zr and Al, and (C) a compound (C-1) having at least one silane coupling group and at least one acidic group or its salt in the molecule thereof or a compound (C-2) having at least one functional group that reacts with a hydrolysate of a silane coupling group or with a hydrolytic condensate of a metal alkoxide and at least one acidic group or its salt in the molecule thereof

The constitutive components in the invention are described below.

### <(A) Silane coupling group-terminated hydrophilic polymer>

In the invention, the composition contains a hydrophilic polymer having a silane coupling group at the polymer terminal from the viewpoint of the hydrophilicity of the hydrophilic film formed of the composition.

The hydrophilic polymer (A) having a silane coupling group at the polymer terminal in the invention is preferably such that the log P of the constitutive monomer unit thereof is from -3 to 2, more preferably from -2 to 0. Within the range, the polymer may give a film of good hydrophilicity.

"log P" is a logarithmic number of a value of octanol/water partitioning coefficient (P) of a compound, as computed by the use of a software PC Models developed by Medicinal Chemistry Project, Pomona College, Claremont, California and available from Daylight Chemical Information System Inc.

Using the silane coupling group-terminated, specific hydrophilic polymer (A) of the type provides a crosslinked structure formed of Si(OR)₄ through the interaction of the silane coupling group and the above-mentioned crosslinking component and further through the interaction of the silane coupling groups, whereby the strength and the durability of the hydrophilic film formed may be further improved owing to the tough crosslinked structure; and in addition, since the polymer has a silane coupling group at its terminal, its part having a hydrophilic group may be kept chemically free and therefore the hydrophilicity may be thereby further increased.

Preferably, the hydrophilic polymer (A) having a silane coupling group at the polymer terminal contains a specific hydrophilic polymer having at least a structure of the following general formula (1) [hereinafter this may be referred to as a specific hydrophilic polymer (A-1)]. The specific hydrophilic polymer (A-1) is characterized by having a silane coupling group at its terminal.

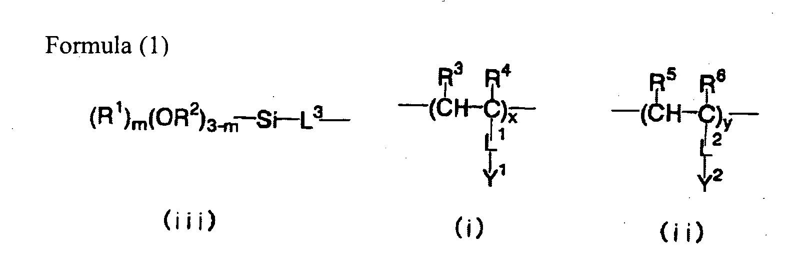

The hydrophilic polymer compound having a structure of formula (1) may have a silane coupling group of the structural unit (iii) in at least one of both terminals the polymer including the polymer units of the structural units (i) and (ii); and it may have the functional group also at the other terminal, and may have a hydrogen atom or a polymerization-initiable functional group.

In formula (1), m indicates 0, 1 or 2; R¹, R², R³, R⁴, R⁵ and R⁶ each independently represent a hydrogen atom or a hydrocarbon group having from 1 to 8 carbon atoms. The hydrocarbon group includes an alkyl group and an aryl group, and is preferably a linear, branched or cyclic alkyl group having from 1 to 8 carbon atoms. Concretely, it includes a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group, a cyclopentyl group.

R¹ to R⁶ are preferably a hydrogen atom, a methyl group or an ethyl group from the viewpoint of the effect and the easy availability of the polymer.

The hydrocarbon group may further have a substituent.

When the alkyl group has a substituent, the substituted alkyl group is composed of a substituent and an alkylene group bonding together, in which the substituent may be a monovalent non-metallic atomic group except hydrogen. Its preferred examples are a halogen atom (-F, -Br, -Cl, -I), a hydroxyl group, an alkoxy group, an aryloxy group, a mercapto group, an alkylthio group, an arylthio group, an alkyldithio group, an aryldithio group, an amino group, an N-alkylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, an ureido group, an N'-alkylureido group, an N',N'-dialkylureido group, an N'-arylureido group, an N',N'-diarylureido group, an N'-alkyl-N'-arylureido group, an N-alkylureido group, an N-arylureido group, an N'-alkyl-N-alkylureido group, an N'-alkyl-N-arylureido group, an N',N'-dialkyl-N-alkylureido group, an N',N'-dialkyl-N-arylureido group, an N'-aryl-N-alkylureido group, an N'-aryl-N-arylureido group, an N',N'-diaryl-N-alkylureido group, an N',N'-diaryl-N-arylureido group, an N'-alkyl-N'-aryl-N-alkylureido group, an N'-alkyl-N'-aryl-N-arylureido group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxycarbonylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N,N-diarylcarbamoyl group, an N-alkyl-N-arylcarbamoyl group, an alkylsulfinyl group, an arylsulfinyl group, an alkylsulfonyl group, an arylsulfonyl group, a sulfo group (-SO₃H) and its conjugate base group (hereinafter referred to as a sulfonato group), an alkoxysulfonyl group, an aryloxysulfonyl group, a sulfinamoyl group, an N-alkylsulfinamoyl group, an N,N-dialkylsulfinamoyl group, an N-arylsulfinamoyl group, an N,N-diarylsulfinamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-alkyl-N-arylsulfamoyl group, a phosphono group (-PO₃H₂) and its conjugate base group (hereinafter referred to as a phosphonato group), a dialkylphosphono group (-PO₃(alkyl)₂), a diarylphosphono group (-PO₃(aryl)₂), an alkylarylphosphono group (-PO₃(alkyl)(aryl)), a monoalkylphosphono group (-PO₃H(alkyl)) and its conjugate base group (hereinafter referred to as an alkylphosphonato group), a monoarylphosphono group (-PO₃H(aryl)) and its conjugate base group (hereinafter referred to as an arylphosphonato group), a phosphonoxy group (-OPO₃H₂) and its conjugate base group (hereinafter referred to as a phosphonatoxy group), a dialkylphosphonoxy group (-OPO₃(alkyl)₂), a diarylphosphonoxy group (-OPO₃(aryl)₂), an alkylarylphosphonoxy group (-OPO(alkyl)(aryl)), a monoalkylphosphonoxy group (-OPO₃H(alkyl)) and its conjugate base (hereinafter referred to as an alkylphosphonatoxy group), a monoarylphosphonoxy group (-OPO₃H(aryl)) and its conjugate base group (hereinafter referred to as an arylphosphonatoxy group), a morpholino group, a cyano group, a nitro group, an aryl group, an alkenyl group, an alkynyl group.

Examples of the alkyl group in these substituents may be the same as those mentioned hereinabove; and examples of the aryl group include a phenyl group, a biphenyl group, a naphthyl group, a tolyl group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carboxyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulfophenyl group, a sulfonatophenyl group, a phosphonophenyl group, a phosphonatophenyl group. Examples of the alkenyl group include a vinyl group, a 1-propenyl group, a 1-butenyl group, a cinnamyl group, a 2-chloro-1-ethenyl group; and examples of the alkynyl group include an ethynyl group, a 1-propynyl group, a 1-butynyl group, a trimethylsilylethynyl group. G¹ in the acyl group (G¹CO-) includes hydrogen, and the above-mentioned alkyl group and aryl group.

Of those substituents, more preferred are a halogen atom (-F, -Br, -Cl, -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonato group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonato group, an dialkylphosphono group, a diarylphosphono group, a monoalkylphosphono group, an alkylphosphonato group, a monoarylphosphono group, an arylphosphonato group, a phosphonoxy group, a phosphonatoxy group, an aryl group, an alkenyl group.

On the other hand, the alkylene group of the substituted alkyl group may be a divalent organic residue derived from the above-mentioned alkyl group having from 1 to 20 carbon atoms, by removing any one hydrogen atom from it. Preferably, it is a linear alkylene group having from 1 to 12 carbon atoms, or a branched alkylene group having from 3 to 12 carbon atoms, or a cyclic alkylene group having from 5 to 10 carbon atoms. Preferred examples of the substituted alkyl group constructed by combining the substituent and the alkylene group are a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminoproyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-hydroxyethyl group, a 2-hydroxypropyl group, a carboxypropyl group, a methoxycarbonylethyl group, an allyloxycarbonylbutyl group, a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group, a 3-butynyl group.

L¹ and L² represent a single bond or an organic linking group. The organic linking group is a polyvalent linking group comprising nonmetallic atoms. Concretely, it may comprise from 0 to 60 carbon atoms, from 0 to 10 nitrogen atoms, from 0 to 50 oxygen atoms, from 0 to 100 hydrogen atoms, and from 0 to 20 sulfur atoms. More concrete examples of the linking group are the following structural units and their combinations.

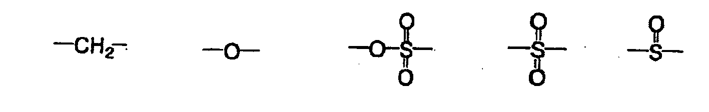

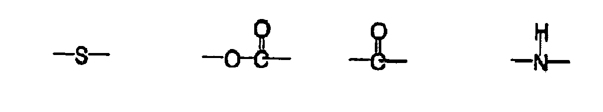

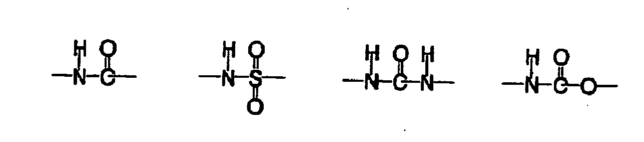

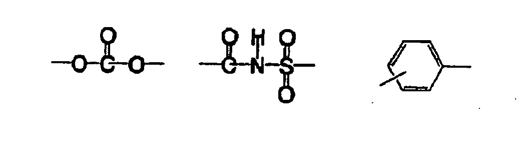

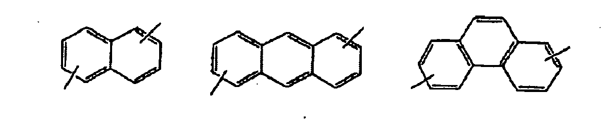

L³ represents a single bond or an organic linking group. The organic linking group is a polyvalent linking group comprising nonmetallic atoms. Concretely, it may include the same as those mentioned in the above for L¹ and L². Above all, -(CH₂)n-S- (where n indicates an integer of from 1 to 8) is an especially preferred structure.

Y¹ and Y² represent -NHCOR⁷, -CONH₂, -CON(R⁷)(R⁸), -COR⁷, -OH, -CO₂M or -SO₃M; and R⁷ and R⁸ each independently represent a hydrogen atom, or a linear, branched or cyclic alkyl group having from 1 to 8 carbon atoms. In -CON(R⁷)(R⁸), R⁷ and R⁸ may bond to each other to form a ring, and the formed ring may be a hetero ring containing a hetero atom such as an oxygen atom, a sulfur atom, a nitrogen atom. R⁷ and R⁸ may have a substituent, in which the introducible substituent may be the same as those mentioned hereinabove for the substituent introducible into the alkyl group for R¹ to R⁶.

Concretely, preferred examples of R⁷ and R⁸ are a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group, a cyclopentyl group.

M includes a hydrogen atom; an alkali metal such as lithium, sodium, potassium; an alkaline earth metal such as calcium, barium; and an onium such as ammonium, iodonium, sulfonium.

Concretely, preferred examples of Y¹ and Y² are -NHCOCH₃, -CONH₂, -COOH, -SO₃-NMe₄⁺.

x and y indicates a compositional ratio (molar ratio) when x + y = 100; and x/y is preferably within a range of from 100/0 to 1/99, more preferably from 100/0 to 5/95.

The molecular weight of the specific hydrophilic polymer (A-1) is preferably from 1,000 to 100,000, more preferably from 1,000 to 50,000, most preferably from 1,000 to 30,000.

Examples (1-1) to (1-23) of the specific hydrophilic polymer (A-1) preferably usable in the invention are shown below, to which, however, the invention should not be limited.

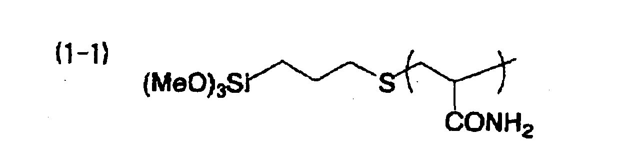

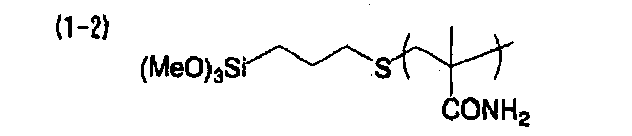

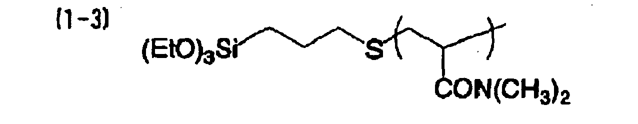

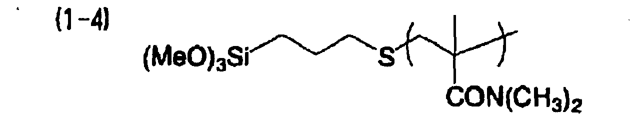

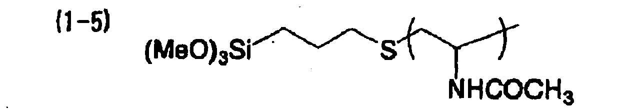

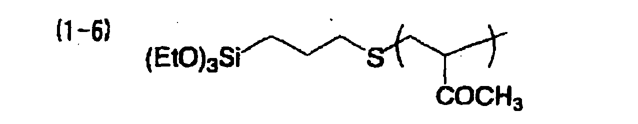

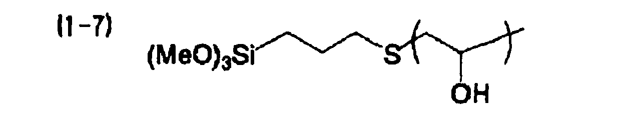

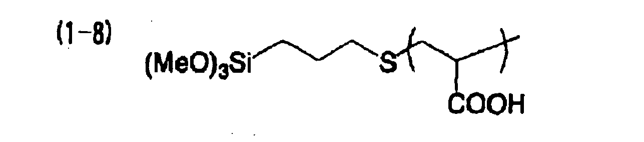

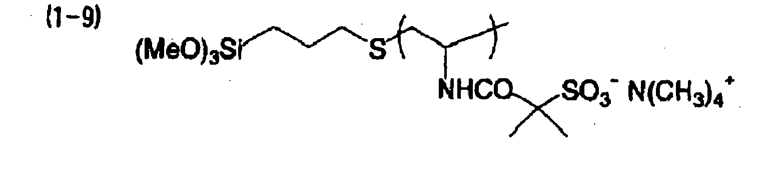

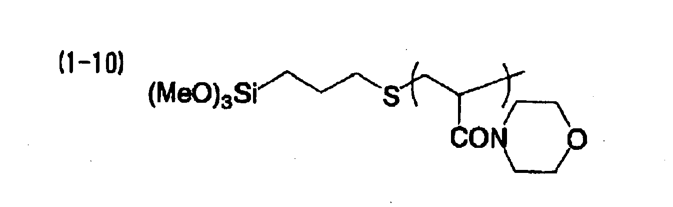

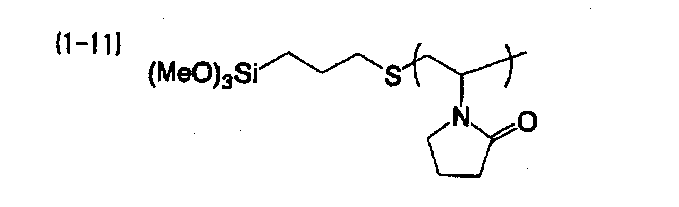

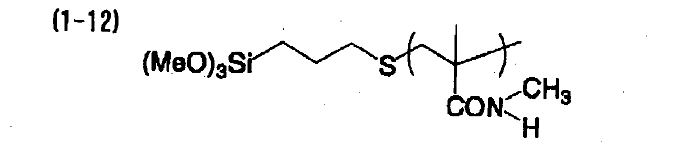

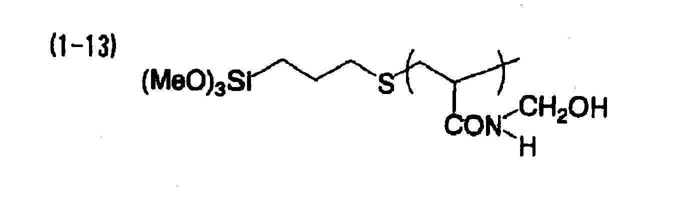

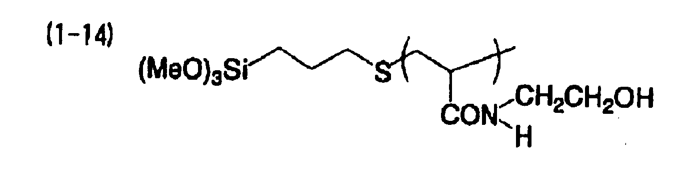

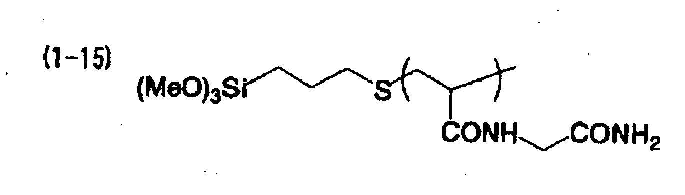

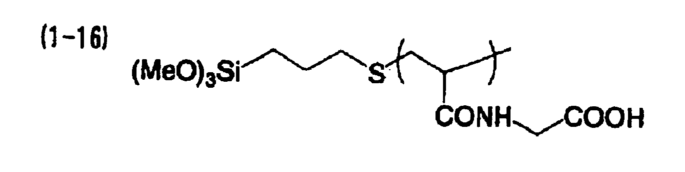

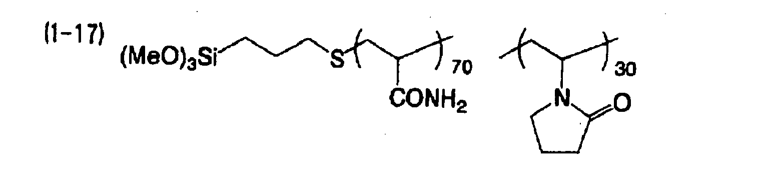

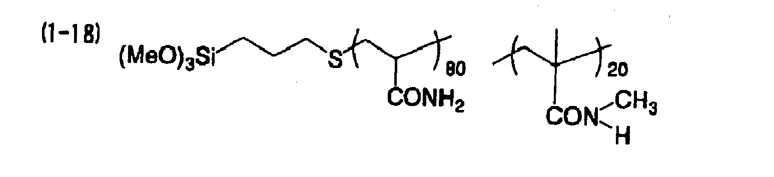

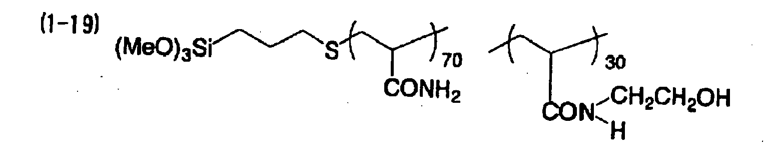

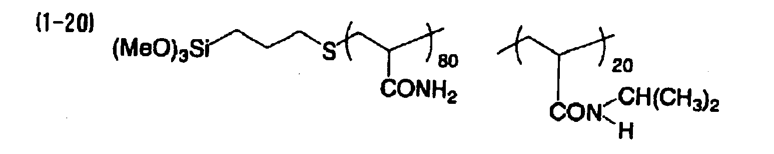

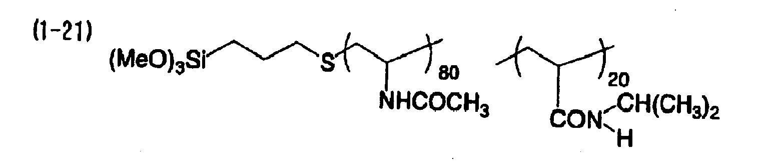

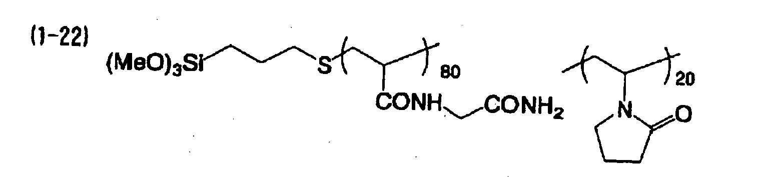

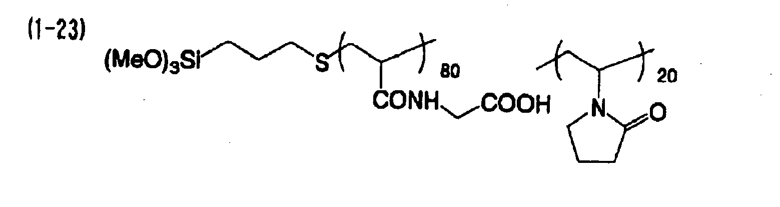

### <Production Method>

The specific hydrophilic polymer (A-1) optionally used along with the other component in the invention may be produced through radical polymerization of a radical-polymerizable monomer having the following structural units (i) and (ii) with a silane coupling agent having the following structural unit (iii) and having a chain transfer capability in radical polymerization. Since the silane coupling agent has a chain transfer capability, the radical polymerization process gives a polymer having a silane coupling group introduced into the terminal of the polymer chain.

The reaction mode is not specifically defined. For example, in the presence of a radical polymerization initiator or under irradiation with a high-pressure mercury lamp, bulk reaction, solution reaction or suspension reaction may be effected for it.

For controlling the amount of the structural unit (iii) to be introduced into the polymer to thereby effectively control the homopolymerization with the structural unit (i) or (ii) in the polymerization reaction, preferred is a method of intermittent or successive addition of the unsaturated compound.

The reaction ratio of the structural unit (i) and (ii) to the structural unit (iii) is not specifically defined. Preferably, the amount of the structural unit (i) and (ii) is within a range of from 0.5 to 50 mols relative to one mol of the structural unit (iii) for preventing side reaction and for increasing the yield of the hydrolyzable silane compound, more preferably from 1 to 45 mols, most preferably from 5 to 40 mols.

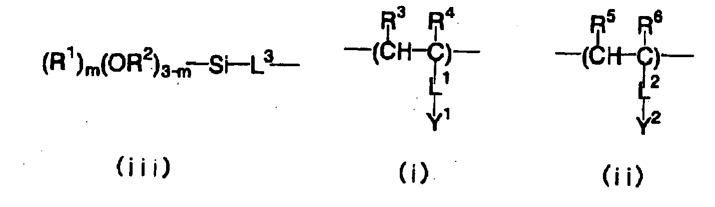

In the structural units (i), (ii) and (iii), R¹ to R⁶, L¹ to L³, Y¹, Y² and m have the same meanings as in formula (1). These compounds are commercially available, and may be readily produced.

Regarding the radical polymerization method for producing the specific hydrophilic polymer (A-1), any known method is employable for it. Concretely, general radical polymerization methods are described, for example, in New Polymer Experimental Science 3, Polymer Synthesis and Reaction 1 (edited by the Polymer Society of Japan, Kyoritsu Publishing), Lecture of New Experimental Chemistry 19, Polymer Chemistry (I) (edited by the Chemical Society of Japan, Maruzen), Lecture of Substance Engineering, Polymer Synthesis Chemistry (Tokyo Denki University Press), and these may apply to the invention.

The specific hydrophilic polymer (A-1) may be a copolymer of the above-mentioned structural units with any other monomer mentioned below. The other usable monomer includes known monomers, for example, acrylates, methacrylates, acrylamides, methacrylamides, vinyl esters, styrenes, acrylic acid, methacrylic acid, acrylonitrile, maleic anhydride, maleimide. Copolymerizing with these monomers may improve various physical properties of the polymer such as the film formability, the film strength, the hydrophilicity, the hydrophobicity, the solubility, the reactivity and the stability thereof.

Examples of the acrylates are methyl acrylate, ethyl acrylate, (n- or i-)propyl acrylate, (n-, i-, sec- or t-)butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenethyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate, 2-(hydroxyphenylcarbonyloxy)ethyl acrylate.

Examples of the methacrylates are methyl methacrylate, ethyl methacrylate, (n- or i-)propyl methacrylate, (n-, i-, sec- or t-)butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate, 2-(hydroxyphenylcarbonyloxy)ethyl methacrylate.

Examples of the acrylamides are acrylamide, N-methylacrylamide, N-ethylacrylamide, N-propylacrylamide, N-butylacrylamide, N-benzylacrylamide, N-hydroxyethylacrylamide, N-phenylacrylamide, N-tolylacrylamide, N-(hydroxyphenyl)acrylamide, N-(sulfamoylphenyl)acrylamide, N-(phenylsulfonyl)acrylamide, N-(tolylsulfonyl)acrylamide, N,N-dimethylacrylamide, N-methyl-N-phenylacrylamide, N-hydroxyethyl-N-methylacrylamide.

Examples of the methacrylamides are methacrylamide, N-methylmethacrylamide, N-ethylmethacrylamide, N-propylmethacrylamide, N-butylmethacrylamide, N-benzylmethacrylamide, N-hydroxyethylmethacrylamide, N-phenylmethacrylamide, N-tolylmethacrylamide, N-(hydroxyphenyl)methacrylamide, N-(sulfamoylphenyl)methacrylamide, N-(phenylsulfonyl)methacrylamide, N-(tolylsulfonyl)methacrylamide, N,N-dimethylmethacrylamide, N-methyl-N-phenylmethacrylamide, N-hydroxyethyl-N-methylmethacrylamide.

Examples of the vinyl esters are vinyl acetate, vinyl butyrate, vinyl benzoate.

Examples of the styrenes are styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorostyrene, dichlorostyrene, bromostyrene, iodostyrene, fluorostyrene, carboxystyrene.

The proportion of the other monomer to be used in producing the copolymer must be enough to improve the physical properties of the copolymer; but if the proportion is too large, then the function of the hydrophilic film formed may be insufficient and the film could not fully enjoy the advantage of the hydrophilic polymer (A-1) added thereto. Accordingly, the total proportion of the other monomer in the specific hydrophilic polymer (A-1) is preferably at most 80 % by weight, more preferably at most 50 % by weight.

In the invention, the specific hydrophilic polymer (A) is in the composition preferably in an amount of from 0 to 50 % by mass relative to the nonvolatile component therein, more preferably from 0 to 20 % by mass from the viewpoint of good balance between the film formability and the hydrophilicity of the composition.

### <(B) Alkoxide compound of element selected from Si, Ti, Zr, Al>

The hydrophilic film forming composition of the invention contains the specific alkoxide (B) as a crosslinking component, and the composition may therefore form a high-strength coating film having excellent hydrophilicity and durability.

The alkoxide compound (B) of an element selected from Si, Ti, Zr and Al is preferably a compound of the following general formula (2). For forming a crosslinked structure to cure the hydrophilic film formed, it is desirable that the above hydrophilic polymer (A), the above specific hydrophilic compound (C-1) or (C-2) and the crosslinking component of the following formula (2) are mixed, and applied onto the surface of a substrate and dried thereon. The crosslinking component of formula (2) is a compound having a polymerizing functional group in its structure, and therefore serving as a crosslinking agent. The component (B) may polycondensate by itself or with the above hydrophilic polymer (A) or the specific hydrophilic compound (C-1) or (C-2), thereby forming a crosslinked structure.

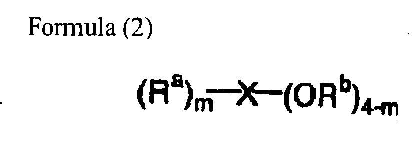

In formula (2), R^{a} represents a hydrogen atom, an alkyl group or an aryl group; R^{b} represents an alkyl group or an aryl group; X represents Si, Al, Ti or Zr; m indicates an integer of from 0 to 2.

The alkyl group for R^{a} and R^{b} preferably has from 1 to 4 carbon atoms.

The aryl group for R^{a} and R^{b} preferably has from 6 to 14 carbon atoms.

The alkyl group and the aryl group may have a substituent. The substituent capable of being introduced into them includes a halogen atom, an amino group, a mercapto group.

The compound is a low-molecular compound, and preferably has a molecular weight of at most 1000.

Examples of the crosslinking component of formula (2) are mentioned below, to which, however, the invention should not be limited.

Those where X is Si, or that is, the hydrolyzable compounds containing silicon include, for example, trimethoxysilane, triethoxysilane, tripropoxysilane, tetramethoxysilane, tetraethoxysilane, tetrapropoxysilane, methyltrimethoxysilane, ethyltriethoxysilane, propyltrimethoxysilane, methyltriethoxysilane, ethyltriethoxysilane, propyltriethoxysilane, dimethyldimethoxysilane, diethyldiethoxysilane, γ-chloropropyltriethoxysilane, γ-mercaptopropyltrimethoxysilane, γ-mercaptopropyltriethoxysilane, γ-aminopropyltriethoxysilane, phenyltrimethoxysilane, phenyltriethoxysilane, phenyltripropoxysilane, diphenyldimethoxysilane, diphenyldiethoxysilane.

Of those, especially preferred are tetramethoxysilane, tetraethoxysilane, methyltrimethoxysilane, ethyltrimethoxysilane, methyltriethoxysilane, ethyltriethoxysilane, dimethyldiethoxysilane, phenyltrimethoxysilane, phenyltriethoxysilane, diphenyldimethoxysilane, diphenyldiethoxysilane.

Those where X is Al, or that is, the hydrolyzable compounds containing aluminium include, for example, trimethoxyaluminate, triethoxyaluminate, tripropoxyaluminate, tetraethoxyaluminate.

Those where X is Ti, or that is, those containing titanium include, for example, trimethoxytitanate, tetramethoxytitanate, triethoxytitanate, tetraethoxytitanate, tetrapropoxytitanate, chlorotrimethoxytitanate, chlorotriethoxytitanate, ethyltrimethoxytitanate, methyltriethoxytitanate, ethyltriethoxytitanate, diethyldiethoxytitanate, phenyltrimethoxytitanate, phenyltriethoxytitanate.

Those where X is Zr, or that is, those containing zirconium include, for example zirconates that correspond to the compounds exemplified hereinabove for those containing titanium.

The specific alkoxide (B) may be in the hydrophilic film forming composition of the invention preferably in an amount falling within a range of from 5 to 80 % by mass relative to the nonvolatile component therein, more preferably within a range of from 20 to 70 % by mass. One or more of the specific alkoxides (B) may be used in the invention, either singly or as combined.

### <Other crosslinking agent>

In the invention, any known crosslinking agent for forming a crosslink by heat, acid or radical, except the specific alkoxide (B), may be used in addition to the specific alkoxide (B), for improving the properties of the hydrophilic film formed, not detracting from the effect of the invention.

"The other crosslinking agent" additionally usable in the invention may be those described in "Handbook of Crosslinking Agents" by Shinzo Yamashita & Tohsuke Kaneko, Taisei-sha, 1981. Not specifically defined, the crosslinking agent usable in the invention may have at least two functional groups capable of effectively crosslinking with the specific hydrophilic polymer (A) and/or the component (B). However, aldehyde ketones having at least one functional group may be used as the crosslinking agent in the invention.

Concretely, examples of the thermal crosslinking agent for use herein are α,ω-alkane or alkene-dicarboxylic acids such as 1,2-ethane-dicarboxylic acid, adipic acid; polycarboxylic acids such as 1,2,3-propane-tricarboxylic acid, 1,2,3,4-butane-tetracarboxylic acid, trimellitic acid, polyacrylic acid; polyamine compounds such as 1,2-ethanediamine, diethylenediamine, diethylenetriamine, polyethyleneimine; polyepoxy compounds such as ethylene or propylene glycol diglycidyl ether, tetraethylene glycol diglycidyl ether, nonaethylene glycol diglycidyl ether, polyethylene or polypropylene glycol glycidyl ether, neopentyl glycol diglycidyl ether 1,6-hexanediol diglycidyl ether, trimethylolpropane triglycidyl ether, sorbitol polyglycidyl ether; oligoalkylene or polyalkylene glycols such as ethylene glycol, propylene glycol, diethylene glycol, tetraethylene glycol; polyhydroxy compounds such as trimethylolpropane, glycerin, pentaerythritol, sorbitol, polyvinyl alcohol; polyaldehyde compounds such as glyoxal, terephthalaldehyde, acetaldehyde, benzaldehyde; polyisocyanate compounds such as tolylene diisocyanate, hexamethylene diisocyanate, diphenylmethane isocyanate, xylylene diisocyanate, polymethylene polyphenyl isocyanate, cyclohexyl diisocyanate, cyclohexanephenylene diisocyanate, naphthalene-1,5-diisocyanate, isopropylbenzene-2,4-diisocyanate, polypropylene glycol/tolylene diisocyanate adducts; blocked polyisocyanate compounds, tetraalkoxysilanes and other silane-coupling agents, as well as metal crosslinking agents such as aluminium, copper or iron(III) acetylacetonate; and polymethylol compounds such as trimethylolmelamine, pentaerythritol; and polythiol compounds such as dithioerythritol, 1,2,6-hexanetriol trithioglycolate, pentaerythritol tetrakis(2-mercaptoacetate). Of those thermal crosslinking agents, preferred are water-soluble crosslinking agents for easily preparing the coating liquids and for preventing the hydrophilicity of the hydrophilic layer formed from lowering.

The additional crosslinking agent may be in the hydrophilic film forming composition of the invention, preferably in an amount of from 0 to 30 % by mass relative to the nonvolatile component therein, more preferably from 0 to 15 % by mass. One or more such crosslinking agents may be used either singly or as combined, but are preferably up to at most 50 % by mass of the specific alkoxide (B) which is the essential crosslinking component in the invention.

### <(C-1) Specific hydrophilic compound>

The specific hydrophilic compound (C-1) in the invention is a compound having at least one silane-coupling group and at least one acidic group or its salt in the molecule thereof.

The acidic group or its salt includes a sulfonic acid (salt) group, a sulfinic acid (salt) group, a sulfuric acid (salt) group, a carboxylic acid (salt) group, a phosphonic acid (salt) group, a phosphoric acid (salt) group.

The molecular weight of the specific hydrophilic compound (C-1) is preferably from 50 to 1000 from the viewpoint of the strength of the film formed, more preferably from 100 to 800, most preferably from 100 to 600. Having the molecular weight falling within the range, the silane compound of the type is preferred since it may compensate the crosslinking efficiency of the hydrophilic polymer binder, which has a silane coupling group only in the polymer terminal and in which the amount of the Si group per weight is small, and since the film formed may have higher hydrophilicity and higher film strength.

One or more different types of the specific hydrophilic compounds may be used either singly or as combined.

The specific hydrophilic compound (C-1) may be in the hydrophilic film forming composition of the invention, preferably in an amount of from 0.5 to 10 % by mass relative to the nonvolatile component therein, more preferably from 2 to 8 % by mass. Within the range, the composition is favorable as capable of giving a film having good hydrophilicity and high film strength with no problem of film cracking.

Preferably, the specific hydrophilic compound (C-1) in the invention is a compound of the following general formula (3):

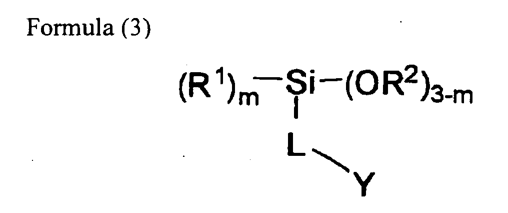

In formula (3), R² represents a hydrogen atom, an alkyl group or an aryl group; R¹ represents an alkyl group or an aryl group; L represents a single bond or an organic linking group; Y represents a sulfonic acid (salt), a sulfinic acid (salt), a sulfuric acid (salt), a carboxylic acid (salt), a phosphonic acid (salt), or a phosphoric acid (salt); m indicates an integer of 0 or 1.

The alkyl group for R¹ and R² preferably has from 1 to 4 carbon atoms. The aryl group for R¹ and R² preferably has from 6 to 14 carbon atoms. The alkyl group and the aryl group may have a substituent. The substituent capable of being introduced into them includes a halogen atom, an amino group, a mercapto group.

L represents a single bond or an organic linking group. The organic linking group is a polyvalent linking group comprising nonmetallic atoms. Concretely, it may comprise from 0 to 60 carbon atoms, from 0 to 10 nitrogen atoms, from 0 to 50 oxygen atoms, from 0 to 100 hydrogen atoms, and from 0 to 20 sulfur atoms. More concrete examples of the linking group are the following structural units and their combinations.

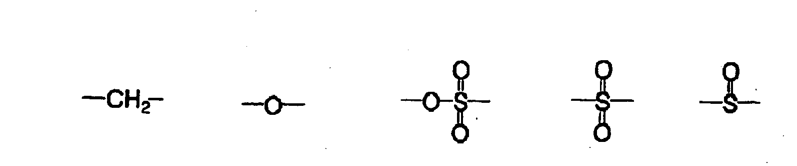

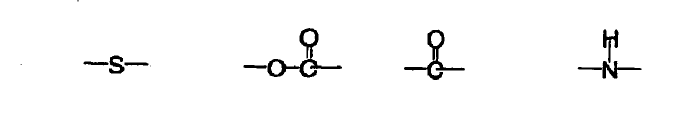

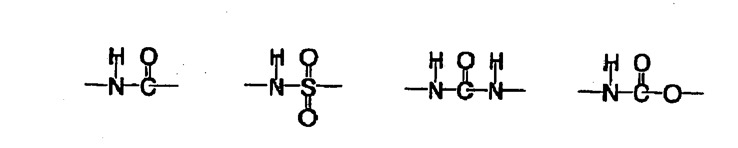

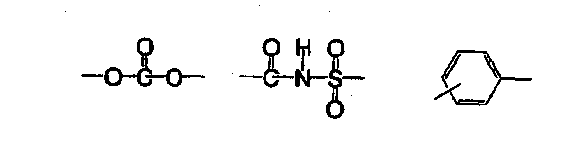

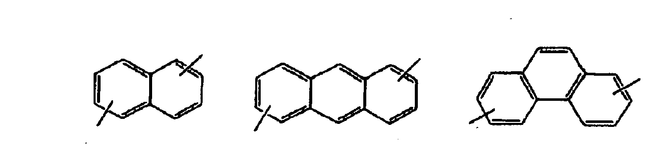

Examples of the specific hydrophilic compound (C-1) favorably used in the invention are mentioned below, to which, however, the invention should not be limited.

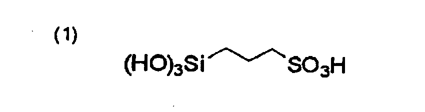

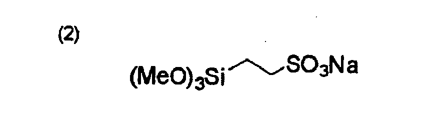

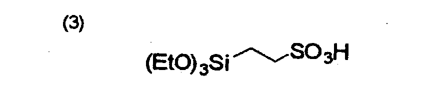

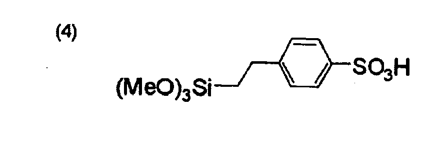

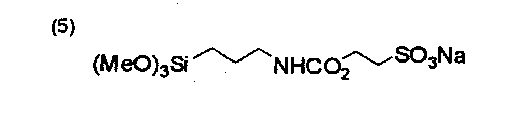

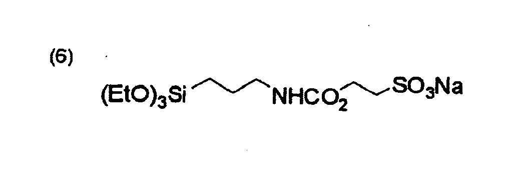

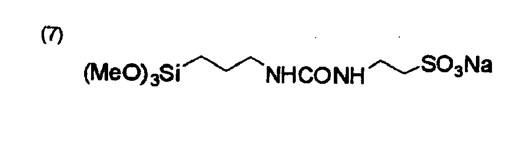

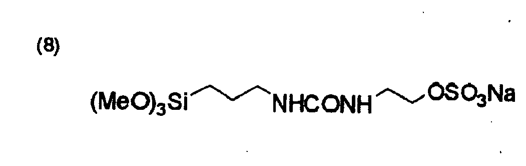

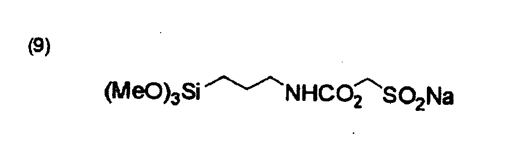

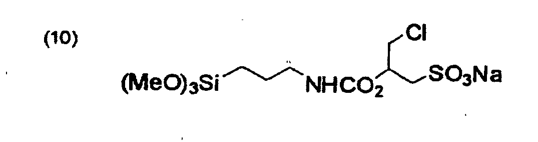

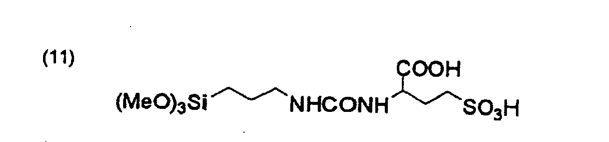

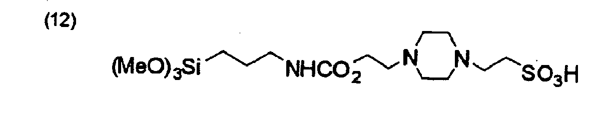

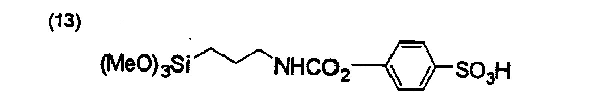

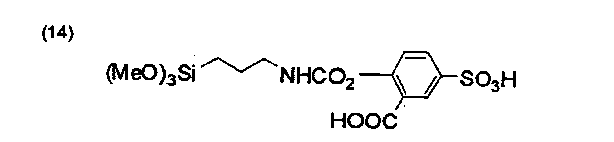

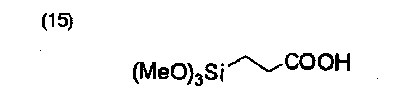

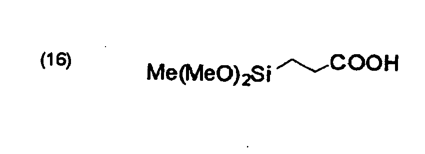

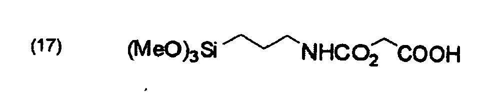

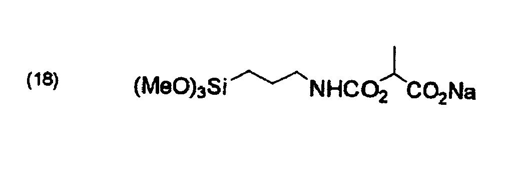

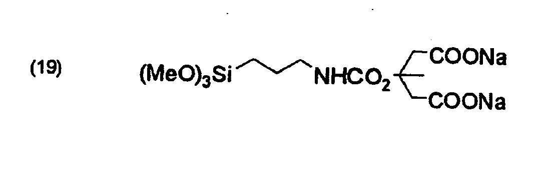

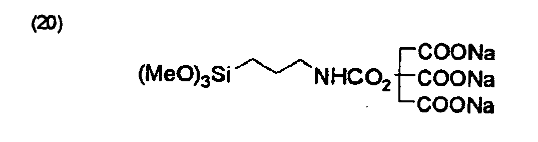

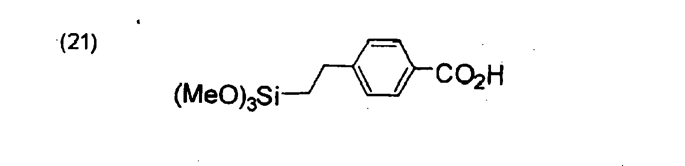

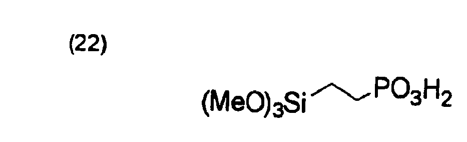

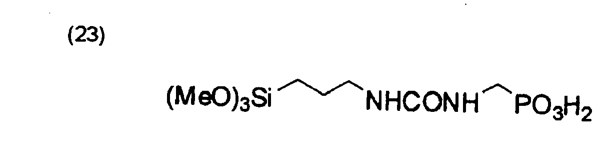

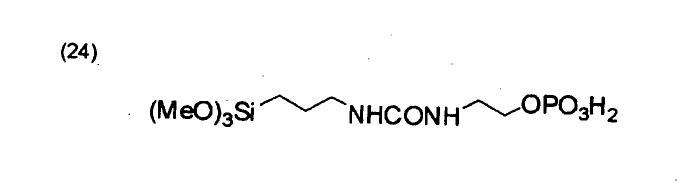

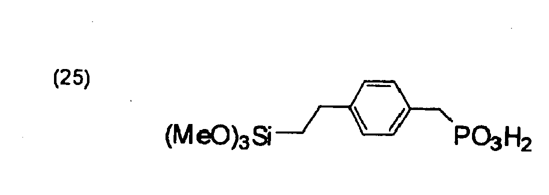

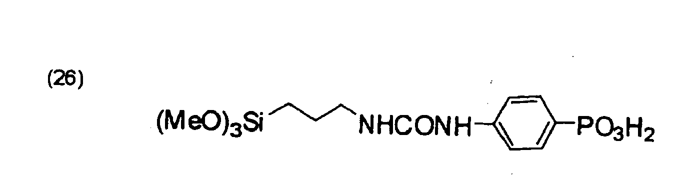

### <(C-2) Specific hydrophilic compound >

The specific hydrophilic compound (C-2) in the invention is a compound having at least one functional group that reacts with a silane coupling group or a hydrolysate of the silane coupling group or with a hydrolytic condensate of a metal alkoxide and at least one acidic group or its salt in the molecule thereof. The functional group that reacts with a hydrolysate of a silane coupling group or with a hydrolytic condensate of a metal alkoxide may be any functional group capable of reacting with a hydroxyl group existing in a silane coupling group and its hydrolysate or in a hydrolytic condensate of a metal alkoxide (for example, when the metal is silicon, it is a silanol group); and it includes a carboxylic acid anhydride group, an amino group, a hydroxyl group, an epoxy group, a methylol group, a mercapto group, an isocyanate group, a blocked isocyanate group (blocked isocyanate means a functional group of an inactivated isocyanate group, and it gives an active isocyanate group when heated). The compound may have at least one such functional group in the molecule, and may have a plurality of such functional groups from the viewpoint of the strength of the film formed. The functional acidic group or its salt includes a carboxylic acid (salt) group, a sulfonic acid (salt) group, a phosphonic acid (salt) group, and a phosphoric acid (salt) group. The compound may have at least one such functional group in the molecule, and may have a plurality of such functional groups from the viewpoint of the hydrophilicity of the film formed.

Preferably, the specific hydrophilic compound (C-2) in the invention has a log P value of from -7 to 2, more preferably from -6 to 1, even more preferably from -6 to 0. Within the range, the polymer may give a film of good hydrophilicity. "log P" is a logarithmic number of a value of octanol/water partitioning coefficient (P) of a compound, as computed by the use of a software PC Models developed by Medicinal Chemistry Project, Pomona College, Claremont, California and available from Daylight Chemical Information System Inc.

The molecular weight of the specific hydrophilic compound (C-2) is preferably from 50 to 1000 from the viewpoint of the strength of the film formed, more preferably from 100 to 800, most preferably from 100 to 600. Having the molecular weight falling within the range, the compound of the type is preferred since it may compensate the crosslinking efficiency of the hydrophilic polymer binder, which has a silane coupling group only in the polymer terminal and in which the amount of the Si group per weight is small, and since the film formed may have higher hydrophilicity and higher film strength.

One or more different types of the specific hydrophilic compounds may be used either singly or as combined. The specific hydrophilic compound (C-2) may be in the hydrophilic film-forming composition of the invention, preferably in an amount of from 0.5 to 10 % by mass relative to the nonvolatile component therein, more preferably from 2 to 8 % by mass. Within the range, the composition is favorable as capable of giving a film having good hydrophilicity and high film strength with no problem of film cracking.

Examples of the specific hydrophilic compound (C-2) favorably used in the invention are shown below, to which, however, the invention should not be limited.

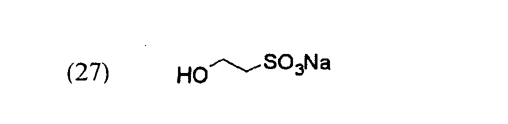

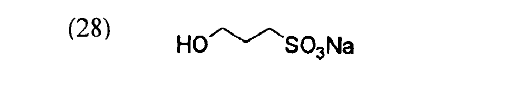

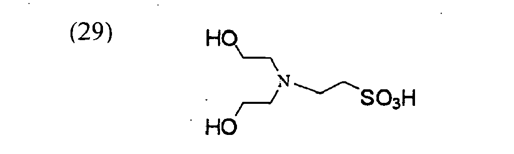

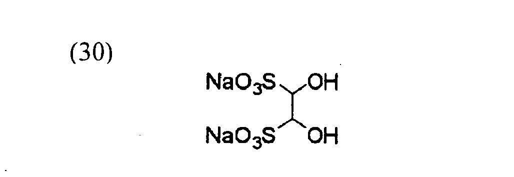

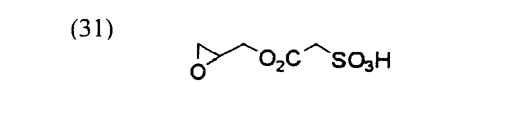

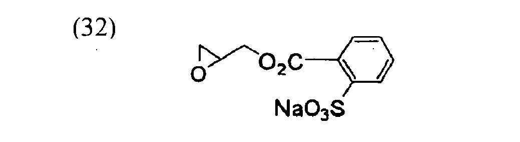

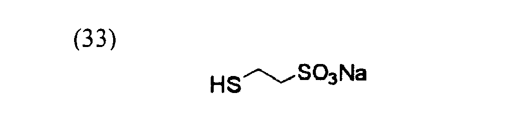

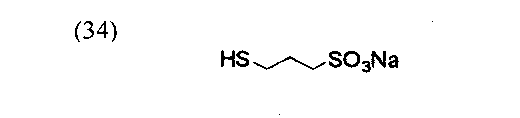

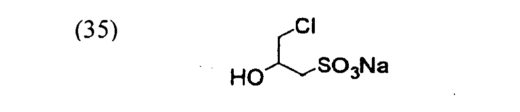

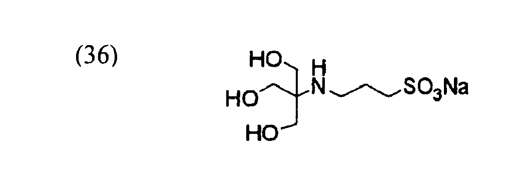

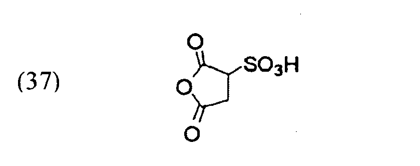

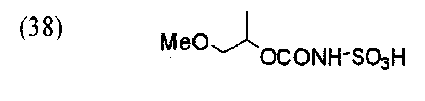

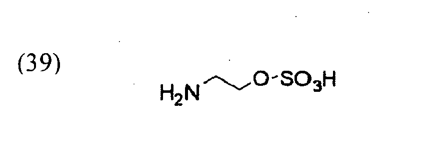

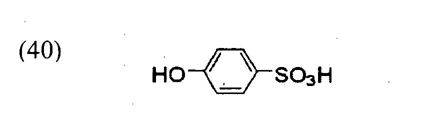

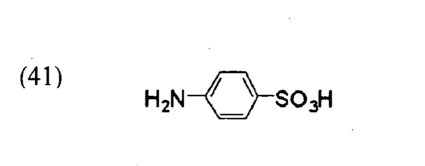

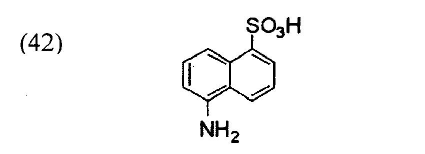

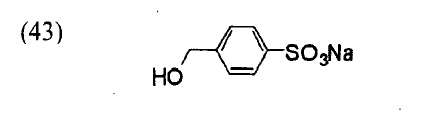

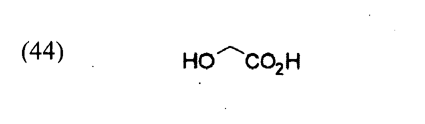

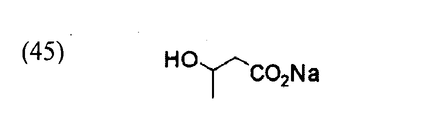

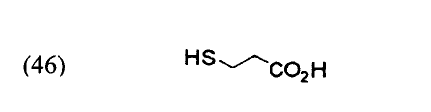

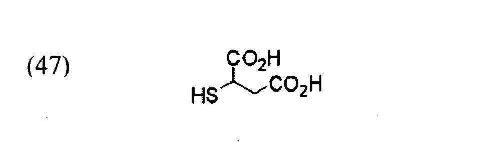

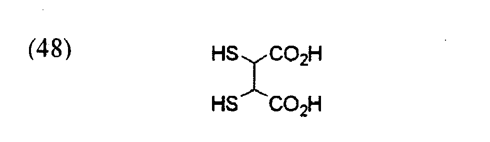

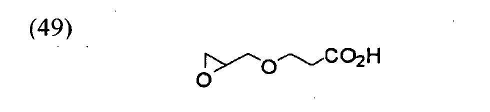

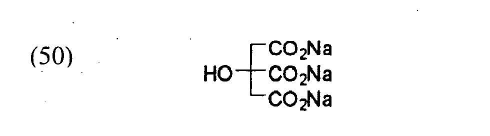

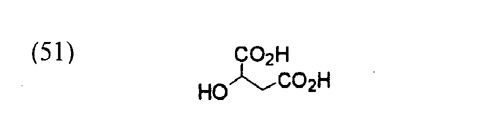

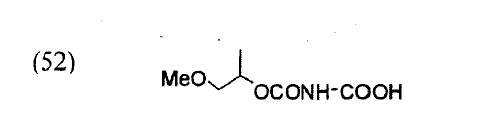

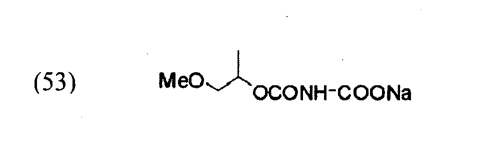

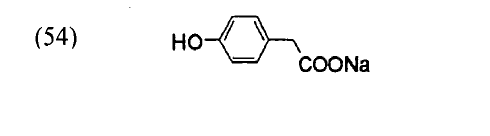

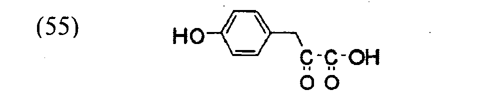

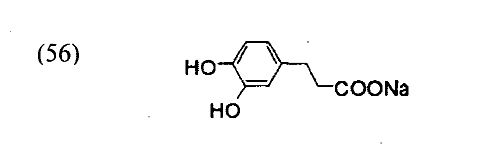

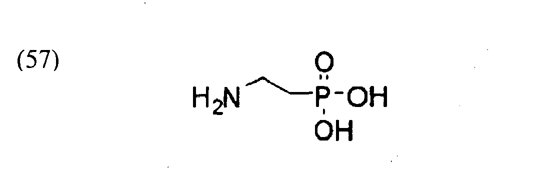

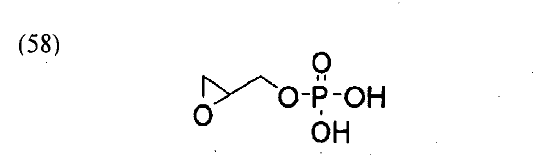

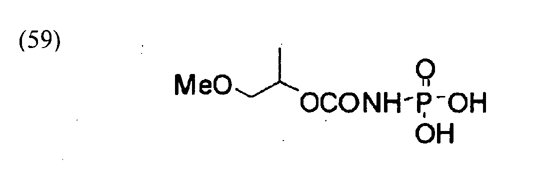

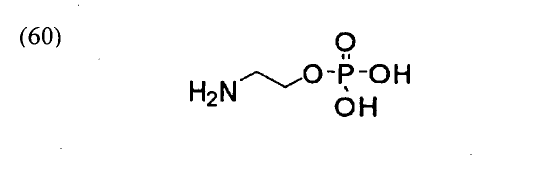

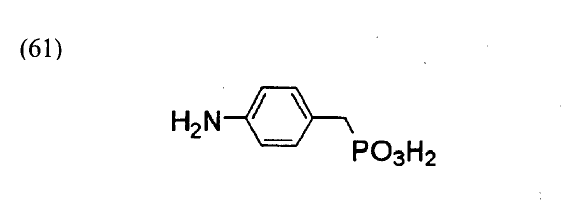

### <Surfactant>

In the invention, a surfactant is preferably used for improving the surface profile coated with the hydrophilic film forming composition. The surfactant includes nonionic surfactants, anionic surfactants, cationic surfactants, ampholytic surfactants and fluorine-containing surfactants. One or more such surfactants may be used herein either singly or as combined.

Not specifically defined, the nonionic surfactants usable in the invention may be any known ones. For example, they include polyoxyethylene alkyl ethers, polyoxyethylene alkylphenyl ethers, polyoxyethylene polystyrylphenyl ethers, polyoxyethylene polyoxypropylene alkyl ethers, glycerin fatty acid partial esters, sorbitan fatty acid partial esters, pentaerythritol fatty acid partial esters, propylene glycol monofatty acid esters, sucrose fatty acid partial esters, polyoxyethylene sorbitan fatty acid partial esters, polyoxyethylene sorbitol fatty acid partial esters, polyethylene glycol fatty acid esters, polyglycerin fatty acid partial esters, polyoxyethylenated castor oils, polyoxyethylene glycerin fatty acid partial esters, fatty acid diethanolamides, N,N-bis-2-hydroxyalkylamines, polyoxyethylene-alkylamines, triethanolamine fatty acid esters, trialkylamine oxides, polyethylene glycols, polyethylene glycol/polypropylene glycol copolymers.

Not specifically defined, the anionic surfactants usable in the invention may be any known ones. For example, they include fatty acid salts, abietic acid salts, hydroxyalkanesulfonic acid salts, alkanesulfonic acid salts, dialkylsulfosuccinate salts, linear alkylbenzenesulfonic acid salts, branched chain alkylbenzenesulfonic acid salts, alkylnaphthalenesulfonic acid salts, alkylphenoxypolyoxyethylene-propylsulfonic acid salts, polyoxyethylene-alkylsulfophenyl ether salts N-methyl-N-oleyltaurine sodium salts, N-alkylsulfosuccinic acid monoamide disodium salts, petroleum-sulfonic acid salts, sulfated beef tallow oils, sulfate salts of fatty acid alkyl esters, alkylsulfate salts, polyoxyethylene alkylether sulfate salts, fatty acid monoglyceride sulfate salts, polyoxyethylene alkylphenyl ether sulfate salts, polyoxyethylene styrylphenyl ether sulfate salts, alkylphosphate salts, polyoxyethylene alkylether phosphate salts, polyoxyethylene alkylphenyl ether phosphate salts, styrene/maleic anhydride copolymer partial saponificates, olefin/maleic anhydride copolymer partial saponificates, naphthalenesulfonic acid salt/formalin condensates.

Not specifically defined, the cationic surfactants usable in the invention may be any known ones. For example, they include alkylamines salts, quaternary ammonium salts, polyoxyethylene alkylamine salts, polyethylene polyamine derivatives.

Not specifically defined, the ampholytic surfactants usable in the invention may be any known ones. For example, they include carboxybetaines, aminocarboxylic acids, sulfobetaines, aminosulfates, imidazolines.

In the above surfactants, "polyoxyethylene" may be replaced with any other "polyoxyalkylene" such as polyoxymethylene, polyoxypropylene and polyoxybutylene; and all such surfactants are usable in the invention.

More preferred surfactants for use in the invention are fluorine-containing surfactants, which have a perfluoroalkyl group in the molecule. The fluorine-containing surfactants include, for example, anionic surfactants such as perfluoroalkylcarboxylic acid salts, perfluoroalkylsulfonic acid salts, perfluoroalkylphosphates; ampholytic surfactants such as perfluoroalkylbetaines; cationic surfactants such as perfluoroalkyltrimethylammonium salts; and nonionic surfactants such as perfluoroalkylamine oxide/perfluoroalkylethylene oxide adducts, oligomers having a perfluoroalkyl group and a hydrophilic group, oligomers having a perfluoroalkyl group and an oleophilic group, oligomers having a perfluoroalkyl group, a hydrophilic group and an oleophilic group, urethanes having a perfluoroalkyl group and an oleophilic group. In addition, the fluorine-containing surfactants described in JP-A 62-170950, 62-226143, 60-168144 are also favorably used herein.

One or more such surfactants may be in the composition either singly or as combined.

The surfactant may be in the composition, preferably in an amount falling within a range of from 0.001 to 10 % by mass relative to the entire solid component therein, more preferably from 0.01 to 5 % by mass.

### <Inorganic particles>

The hydrophilic film forming composition of the invention may contain inorganic particles for improving the cured film strength of the hydrophilic film formed of it and for improving the hydrophilicity and the water holding capability thereof.

Preferred examples of the inorganic particles are, for example, silica, alumina, magnesium oxide, titanium oxide, magnesium carbonate, calcium alginate and their mixtures. Even though they are not photo-thermal convertible ones, they may be used for surface roughening and for enhancing the interfacial adhesiveness of the film formed.

Preferably, the inorganic particles have a mean particle size of from 5 nm to 10 µm, more preferably from 0.5 µm to 3 µm. Within the range, the particles may stably disperse in the hydrophilic film, thereby sufficiently keeping the film strength of the film, and therefore the film may exhibit excellent hydrophilicity.

The above-mentioned inorganic particles are readily available as commercial products of colloidal silica dispersion, etc.

The inorganic particles may be in the hydrophilic film forming composition of the invention, preferably in an amount of at most 20 % by mass relative to the overall solid component therein, more preferably at most 10 % by mass.

### <UV absorbent>

The hydrophilic film forming composition of the invention may contain a UV absorbent for improving the weather resistance and the durability of the hydrophilic member formed of it.

The UV absorbent includes compounds capable of absorbing UV rays to emit fluorescence, or so-called fluorescent brighteners, typically for example, benzotriazole compounds as in JP-A 58-185677, 61-190537, 2-782, 5-197075, 9-34057; benzophenone compounds as in JP-A 46-2784, 5-194483, USP 3214463,; cinnamic acid compounds as in JP-B 48-30492, 56-21141, JP-A 10-88106; triazine compounds as in JP-A 4-298503, 8-53427, 8-239368, 10-182621, JP-T 8-501291; stilbene compounds and benzoxazole compounds as in Research Disclosure No. 24239.

Its amount to be added may be suitably determined depending on its use. In general, it is preferably from 0.5 to 15 % by mass in terms of the solid content thereof in the composition.

### <Antioxidant>

An antioxidant may be added to the hydrophilic film forming composition of the invention, for the purpose of improving the stability of the hydrophilic member formed of it. The antioxidant is described in EP-A 223739, 309401, 309402, 310551, 310552, 459416, GE-A 3435443, JP-A 54-48535, 62-262047, 63-113536, 63-163351, 2-262654, 2-71262, 3-121449, 5-61166, 5-119449, USP 4814262, 4980275.

Its amount to be added may be suitably determined depending on its use. In general, it is preferably from 0.1 to 8 % by mass in terms of the solid content thereof in the composition.

### <Solvent>

It may be effective to suitably add an organic solvent to the hydrophilic film forming composition of the invention. When the composition is applied onto a substrate to form a hydrophilic layer thereon in constructing a hydrophilic member, the solvent may be effective for securing the formation of a uniform coating film on the substrate.

The solvent includes, for example, ketone solvents such as acetone, methyl ethyl ketone, diethyl ketone; alcohol solvents such as methanol, ethanol, 2-propanol, 1-propanol, 1-butanol, tert-butanol; chlorine-containing solvents such as chloroform, methylene chloride; aromatic solvents such as benzene, toluene; ester solvents such as ethyl acetate, butyl acetate, isopropyl acetate; ether solvents such as diethyl ether, tetrahydrofuran, dioxane; glycol ether solvents such as ethylene glycol monomethyl ether, ethylene glycol dimethyl ether.

In this case, it is effective to add the solvent within the range not causing any VOC (volatile organic solvent)-related problems, and the amount of the solvent is preferably from 0 to 50 % by mass of the coating liquid to be used in hydrophilic member formation, more preferably from 0 to 30 % by mass.

### <Polymer compound>

Various polymer compounds may be added to the hydrophilic film forming composition of the invention, for the purpose of controlling the physical properties of the hydrophilic film formed, not detracting from the hydrophilicity thereof. The polymer compounds include acrylic polymers, polyvinylbutyral resins, polyurethane resins, polyamide resins, polyester resins, epoxy resins, phenolic resins, polycarbonate resins, polyvinylformal resins, shellac, vinylic resins, acrylic resins, rubber resins, waxes, and other natural resins. Two or more of these may be used, as combined. Of those, preferred are vinylic copolymers obtained through copolymerization of acrylic monomers. Regarding the copolymerization composition of the polymer binder, also preferred are copolymers containing "carboxyl group-having monomer", "alkyl methacrylate" or "alkyl acrylate" as the structural unit thereof.

In addition to the above, if desired, the composition may also contain, for example, a leveling additive, a mat agent, a wax for controlling the physical properties of the film formed, and a tackifier for improving the adhesiveness of the film to a substrate not detracting from the hydrophilicity of the film.

The tackifier includes, for example, high-molecular-weight adhesive polymers described in JP-A 2001-49200, pp. 5-6 (e.g., copolymer comprising an ester of (meth)acrylic acid and an alcohol having an alkyl group having from 1 to 20 carbon atoms, an ester of (meth)acrylic acid and an alicyclic alcohol having from 3 to 14 carbon atoms, an ester of (meth)acrylic acid and an aromatic alcohol having from 6 to 14 carbon atoms); and low-molecular-eight tackifying resins having a polymerizing unsaturated bond.

### <Formation of hydrophilic film>

In the invention, the hydrophilic film may be formed by dispersing or dissolving the necessary components in a solvent to prepare a coating liquid, then applying the liquid onto a suitable substrate, and curing it under heat.

In one preferred embodiment of preparing the coating liquid of the hydrophilic film forming composition, the blend ratio of the specific hydrophilic polymer (A) and the specific alkoxide (B) is preferably such that (B)/(A) is from 0.1/1 to 4/1 by mass. The uppermost limit of the crosslinking component to be in the composition is not specifically defined, falling within a range within which the component may fully crosslink the hydrophilic polymer. However, when a large excessive amount of the crosslinking component is used, then it may be problematic in that the hydrophilic surface of the formed film may be sticky owing to the excessive crosslinking component not participating in the crosslinking reaction.

Especially when the specific hydrophilic polymer (A-1) is used, as a type of the specific hydrophilic polymer (A), then the specific hydrophilic polymer (A-1), the specific alkoxide (B) of the crosslinking component and the specific hydrophilic compound (C-1) or (C-2) are dissolved and well stirred in a solvent, whereby these components may be hydrolyzed and polycondensed to form an organic-inorganic composite sol liquid. The sol liquid is the hydrophilic film forming coating liquid of the invention, and this may form a surface hydrophilic layer having high hydrophilicity and high film strength. In preparing the organic-inorganic hybrid sol liquid, it is desirable to add an acid catalyst or basic catalyst to the composition for promoting the hydrolysis and polycondensation. In order to attain a practically favorable reaction efficiency, the catalyst is indispensable.

For the catalyst, an acid or a basic compound may be used directly as it is, or a solution prepared by dissolving an acid or a basic compound in a solvent such as water or alcohol (hereinafter this may be generically referred to as an acid catalyst and a basic catalyst) may be used. The concentration of the acid or the basic compound to be dissolved in a solvent is not specifically defined, and may be suitably determined depending on the characteristics of the acid or the basic compound used and on the desired content of the catalyst. In case where the concentration is high, the hydrolysis and polycondensation speed may be high. However, when a basic catalyst having a high concentration is used, then a deposit may form in the sol liquid. Therefore, in case where a basic catalyst is used, its concentration is preferably at most 1 N in terms of the concentration thereof in its aqueous solution.

The type of the acid catalyst and the basic catalyst is not specifically defined. When a catalyst having a high concentration must be used, then the catalyst is preferably composed of elements that remain little in the coating film after dried.

Concretely, the acid catalyst includes hydrogen halides such as hydrochloric acid; nitric acid, sulfuric acid, sulfurous acid, hydrogen sulfide, perchloric acid, hydrogen peroxide, carbonic acid; carboxylic acids such as formic acid, acetic acid; substituted carboxylic acids of a structural formula RCOOH in which R is substituted with any other element or substituent; and sulfonic acids such as benzenesulfonic acid. The basic catalyst includes ammoniac bases such as aqueous ammonia; and amines such as ethylamine and aniline.

As other catalysts, a Lewis acid catalyst of a metal complex is also usable. Preferred is a metal complex catalyst that comprises a metal element selected from the Groups 2A, 3B, 4A and 5A of the Periodic Table, and an oxo or hydroxy oxygen-containing compound selected from β-diketones, ketoesters, hydroxycarboxylic acids and their esters, aminoalcohols and enol-type active hydrogen compounds.

As the constitutive metal element, preferred are elements of Group 2A such as Mg, Ca, St, Ba; elements of Group 3B such as Al, Ga; elements of Group 4A such as Ti, Zr; and elements of Group 5A such as V, Nb, Ta. The metal element of the type may form a complex having an excellent catalytic effect. Of those, more preferred are complexes with Zr, Al or Ti, as they are excellent.

The oxo or hydroxy oxygen-containing compound that constitutes the ligand of the above metal complex usable in the invention includes β-diketones such as acetylacetone (2,4-pentanedione), 2,4-heptanedione; ketoesters such as methyl acetacetate, ethyl acetacetate, butyl acetacetate; hydroxycarboxylic acids and their esters such as lactic acid, methyl lactate, salicylic acid, ethyl salicylate, phenyl salicylate, malic acid, tartaric acid, methyl tartrate; ketoalcohols such as 4-hydroxy-4-methyl-2-pentanone, 4-hydroxy-2-pentanone, 4-hydroxy-4-methyl-2-heptanone, 4-hydroxy-2-heptanone; aminoalcohols such as monoethanolamine, N,N-dimethylethanolamine, N-methyl-monoethanolamine, diethanolamine, triethanolamine; enol-type active compounds such as methylolmelamine, methylolurea, methylolacrylamide, diethyl malonate; and compounds derived from acetylacetone (2,4-pentanedione) by introducing a substituent into the methyl group, the methylene group or the carbonyl carbon thereof.

Acetylacetone derivatives are preferred for the ligand. In the invention, acetylacetone derivatives are meant to indicate compounds derived from acetylacetone by introducing a substituent into the methyl group, the methylene group or the carbonyl carbon thereof. The substituent capable of being introduced into the methyl group of acetylacetone includes an alkyl group, an acyl group, a hydroxyalkyl group, a carboxyalkyl group, an alkoxy group and an alkoxyalkyl group, which may be linear or branched and have from 1 to 3 carbon atoms. The substituent capable of being introduced into the methylene group of acetylacetone includes a carboxyl group, and a carboxyalkyl group and a hydroxyalkyl group which may be linear or branched and have from 1 to 3 carbon atoms. The substituent capable of being introduced into the carbonyl carbon of acetylacetone may be an alkyl group having from 1 to 3 carbon atoms, and in this case, a hydrogen atom may be added to the carbonyl oxygen to form a hydroxyl group.

Preferred examples of the acetylacetone derivative are ethylcarbonylacetone, n-propylcarbonylacetone, i-propylcarbonylacetone, diacetylacetone, 1-acetyl-1-propionyl-acetylacetone, hydroxyethylcarbonylacetone, hydroxypropylcarbonylacetone, acetacetic acid, acetopropionic acid, diacetacetic acid, 3,3-diacetopropionic acid, 4,4-diacetobutyric acid, carboxyethylcarbonylacetone, carboxypropylcarbonylacetone, diacetonalcohol. Of those, especially preferred are acetylacetone and diacetylacetone. The complex of the above acetylacetone derivative and the above metal element is a mononuclear complex having from 1 to 4 molecular ligands of the acetylacetone derivative per one metal element therein. In case where the number of the coordinable chemical bonds of the metal element is larger than the total number of the coordinable chemical bonds of the acetylacetone derivative, then any ordinary ligand generally used in ordinary complexes, such as water molecule, halide ion, nitro group or ammonio group, may be coordinated in the complex.

Preferred examples of the metal complex are tris(acetylacetonato)aluminium complex, di(acetylacetonato)aluminium/aquo-complex, mono(acetylacetonato)aluminium/chloro complex, di(diacetylacetonato)aluminium complex, ethylacetacetate aluminium diisopropylate, aluminium tris(ethylacetacetate), cyclic aluminium oxide isopropylate, tris(acetylacetonato)barium complex, di(acetylacetonato)titanium complex, tris(acetylacetonato)titanium complex, di-i-propoxy/bis(acetylacetonato)titanium complex, zirconium tris(ethylacetacetate), zirconium tris(benzoic acid) complex. These have excellent stability in water-base coating liquids and have an excellent gellation-promoting effect in sol-gel reaction in heating and drying. Of those, especially preferred are ethylacetacetate aluminium diisopropylate, aluminium tris(ethylacetacetate), di(acetylacetonato)titanium complex, zirconium tris(ethylacetacetate).

Description of the counter salt of the above-mentioned metal complex is omitted in this specification. Regarding its type, the counter salt may be any water-soluble salt capable of keeping the charge of the complex compound neutral. For example, it includes nitrates, hydrohalides, sulfates, phosphates and the like capable of securing stoichiometric neutrality of the complex.

The behavior of the metal complex in silica sol-gel reaction is described in detail in J. Sol-Gel, Sci. and Tec., 16, 209 (1999). For its reaction mechanism, the following scheme may be presumed. Specifically, in a coating liquid, the metal complex is stable, as having a coordination structure. In the dehydrating condensation reaction that starts in the heating and drying step after coating, the metal complex may promote crosslinking, like an acid catalyst.

The hydrophilic film forming composition may be prepared by dissolving the specific hydrophilic polymer (A), the specific alkoxide (B) or the like crosslinking component, and the specific hydrophilic compound (C-1) or (C-2) in a solvent such as ethanol, then optionally adding the above-mentioned catalyst thereto, and stirring it. The reaction temperature is preferably from room temperature to 80°C; and the reaction time, or that is, the time for which the system is kept stirred is preferably within a range of from 1 to 72 hours. The stirring promotes the hydrolysis and polycondensation of the two components to give an organic-inorganic hybrid sol liquid.

Not specifically defined, the solvent to be used in preparing the hydrophilic film forming coating composition may be any one capable of uniformly dissolving and dispersing the components therein. For example, preferred is a water-base solvent such as methanol, ethanol, water.

As described in the above, a sol-gel process is utilized in preparing the organic-inorganic hybrid sol liquid (hydrophilic coating liquid composition) to form a hydrophilic film in the invention. The sol-gel process is described in detail in published documents, such as Sumio Sakuhana, "Science of Sol-Gel Process" (published by Agune Shofu-sha, 1988); Ken Hirashima, "Technique of Forming Functional Thin Film by Newest Sol-Gel Process" (published by General Technology Center, 1992). The methods described in these are applicable to preparing the hydrophilic film forming coating liquid composition of the invention.

As so described hereinabove, the hydrophilic film forming coating liquid composition of the invention may contain various additives depending on the object thereof, not detracting from the effect of the invention. For example, as described in detail in the above, a surfactant may be added to the composition for improving the uniformity of the coating liquid.

The hydrophilic film forming coating liquid composition thus prepared in the manner as above is applied onto a support substrate and dried thereon, thereby forming a hydrophilic surface thereon. The same type or different types of components may be dispersed or dissolved in the same type or different types of solvents to prepare plural coating liquids; and these coating liquids may be separately applied onto a substrate and repeatedly dried to form a hydrophilic film of the invention on the substrate.

The thickness of the hydrophilic surface layer may be suitably determined, depending on the use thereof. In general, it may fall between 0.2 and 5.0 g/m², preferably between 0.5 and 3.0 g/m² in terms of the dry coating amount. Within the range, the hydrophilic film may exhibit excellent hydrophilicity and may have good film strength.

Various coating methods may be employed, for example, a bar coating method, a spin coating method, a spray coating method, a curtain coating method, a dip coating method, an air knife coating method, a blade coating method, or a roll coating method.

### <Substrate>

The substrate usable in the invention is described. When the substrate is a transparent one expected to have an anti-fogging effect, then glass and plastics are preferred for its material. The applications to which the anti-fogging member is applicable include mirrors such as rearview mirrors for vehicles, mirrors in bathrooms, mirrors in washrooms, mirrors for dental use, road mirrors; lenses such as eyeglass lenses, optical lenses, camera lenses, endoscope lenses, lenses for illumination, lenses for semiconductors, lenses for duplicators; prisms; windowpanes for buildings, control towers; windowpanes for vehicles, such as cars, railroad carriages, airplanes, ships, midget submarines, snowmobiles, ropeway gondolas, gondolas in amusement parks, spaceships; windshields for vehicles, such as cars, railroad carriages, airplanes, ships, midget submarines, snowmobiles, motorcycles, ropeway gondolas, gondolas in amusement parks, spaceships; protector goggles, sports goggles, protector mask shields, sports mask shields, helmet shields, glass cases for frozen food displays; cover glass for metering instruments; and films to be stuck to the surface of the above articles.

In case where the hydrophilic member of the invention is expected to have a surface-cleaning effect, for example, metals, ceramics, glass, plastics, wood, stones, cement, concrete, fibers, fabrics and their combinations and laminates are all favorably usable for the substrate for it. The applications to which the member having a surface-cleaning effect is applicable include building materials, building exterior materials, building interior materials, window frames, windowpanes, structural members, exterior and coating materials for vehicles, exterior materials for machinery and articles, dust covers and coatings, traffic signs, various display devices, advertising towers, road noise barriers, railroad noise barriers, bridges, guardrail exterior and coating materials, tunnel interior and coating materials, insulators, solar cell covers, heat collector covers for solar heaters, plastic greenhouses, cover for vehicle lights, housing equipment, toilets, bathtubs, washstands, lighting instruments, lighting instrument covers, kitchen utensils, dishes, dish washers, dish driers, sinks, cooking ovens, kitchen hoods, ventilation fans, and films to be stuck to the surface of the above articles.

In case where the hydrophilic member of the invention is expected to have an antistatic effect, for example, metals, ceramics, glass, plastics, wood, stones, cement, concrete, fibers, fabrics and their combinations and laminates are favorably usable for the substrate for it. Its applications include cathode-ray tubes, magnetic recording media, optical recording media, photomagnetic recording media, audio tapes, video tapes, analog records; housings, parts, exterior materials and coating materials of electric appliances for household use; housings, parts, exterior materials and coating materials of OA appliances; building materials, exterior materials for buildings, interior materials for buildings, window frames, windowpanes, structural members, exterior and coating materials for vehicles, exterior materials for machinery and articles, dust covers and coatings; and films to be stuck to the surface of the above articles.

For the substrate, preferred is any of an inorganic substrate of glass or ceramics, and a substrate having a surface of a polymer resin. The resin substrate includes any of a resin itself, a substrate coated with a resin, and a composite material of which the surface layer is a resin layer. Typical examples of the resin substrate formed of a resin alone are a film substrate such as a scattering-preventive film, a design film, an anti-corrosive film; and a resin substrate for signboard, highway nose barriers. Typical examples of the substrate coated with a resin on its surface are car bodies, coated plates such as coated building materials, laminate plates having a resin film stuck to the surface thereof, primer-processed substrates, hard coat-processed substrates. Typical examples of the composite material of which the surface layer is a resin layer are resin-sealed materials having an adhesive layer formed on the back thereof, and reflective mirrors.

Further, one or more undercoat layers may be formed on the substrate for the purpose of increasing the adhesiveness between the substrate and the hydrophilic film formed thereon. The material of the undercoat layer may be a hydrophilic resin or a water-dispersive latex.

The hydrophilic resin includes, for example, polyvinyl alcohol (PVA), cellulosic resins [e.g., methyl cellulose (MC), hydroxyethyl cellulose (HEC), carboxymethyl cellulose (CMC)], chitins, chitosans, starch, ether bond-having resins [e.g., polyethylene oxide (PEO), polyethylene glycol (PEG), polyvinyl ether (PVE)], carbamoyl group-having resins [e.g., polyacrylamide (PAAM), polyvinylpyrrolidone (PVP)]. It also includes carboxyl group-having polyacrylic acid salts, maleic acid resins, alginic acid salts, gelatins.

Of the above, preferred is at least one selected from polyvinyl alcohol resins, cellulosic resins, ether bond-having resins, carbamoyl group-having resins, carboxyl group-having resins and gelatins; and more preferred are polyvinyl alcohol (PVA) resins and gelatins.

The water-dispersive latex includes acrylic latex, polyester latex, NBR resin, polyurethane latex, polyvinyl acetate latex, SBR resin, polyamide latex. Of those, preferred is acrylic latex.

One or more different types of the above hydrophilic resin and the water-dispersive latex may be used either singly or as combined; and the hydrophilic resin and the water-dispersive latex may be combined.

A crosslinking agent capable of crosslinking the hydrophilic resin and the water-dispersive latex may be used.

The crosslinking agent applicable to the invention may be any known crosslinking agent capable of forming a crosslink by heat. General thermal crosslinking agents are described in "Handbook of Crosslinking Agents" by Shinzo Yamashita & Tohsuke Kaneko, Taisei-sha, 1981. Not specifically defined, the crosslinking agent usable in the invention may have at least two functional groups capable of effectively crosslinking with the hydrophilic resin and the water-dispersive latex. Concretely, examples of the thermal crosslinking agent for use herein are polycarboxylic acids such as polyacrylic acid; amine compounds such as polyethyleneimine; polyepoxy compounds such as ethylene or propylene glycol diglycidyl ether, tetraethylene glycol diglycidyl ether, nonaethylene glycol diglycidyl ether, polyethylene or polypropylene glycol glycidyl ether, neopentyl glycol diglycidyl ether 1,6-hexanediol diglycidyl ether, trimethylolpropane triglycidyl ether, sorbitol polyglycidyl ether; polyaldehyde compounds such as glyoxal, terephthalaldehyde; polyisocyanate compounds such as tolylene diisocyanate, hexamethylene diisocyanate, diphenylmethane isocyanate, xylylene diisocyanate, polymethylene polyphenyl isocyanate, cyclohexyl diisocyanate, cyclohexanephenylene diisocyanate, naphthalene-1,5-diisocyanate, isopropylbenzene-2,4-diisocyanate, polypropylene glycol/tolylene diisocyanate adducts; blocked polyisocyanate compounds, tetraalkoxysilanes and other silane-coupling agents, as well as metal crosslinking agents such as aluminium, copper or iron(III) acetylacetonate; and polymethylol compounds such as trimethylolmelamine, pentaerythritol. Of those thermal crosslinking agents, preferred are water-soluble crosslinking agents for easily preparing the coating liquids and for preventing the hydrophilicity of the hydrophilic layer formed from lowering.

The total amount of the hydrophilic resin and/or the water-dispersive latex in the undercoat layer is preferably from 0.01 to 20 g/m², more preferably from 0.1 to 10 g/m².

### [Surface free energy]

The degree of hydrophilicity of the surface of a hydrophilic layer is generally measured, based on the contact angle to a water drop thereon. However, on the surface having extremely high hydrophilicity as in the invention, the water drop contact angle may be at most 10°, even at most 5°; and therefore, the method may be limitative for mutual comparison of the degree of hydrophilicity of the surface. On the other hand, for evaluating the degree of hydrophilicity of a solid surface in more detail, there is known a method of measuring surface free energy. Various methods have been proposed for it. In the invention, a Zisman plotting method was employed as an example of measuring surface free energy. Concretely, the method is as follows: Based on the phenomenon that an aqueous solution of an inorganic electrolyte such as magnesium chloride may have a larger surface tension increasing with the increase in its concentration, the contact angle of a sample is measured in air at room temperature using the aqueous solution. The data with the aqueous solution having a different concentration are plotted on a graph, in which the horizontal axis indicates the surface tension of the aqueous solution and the vertical axis indicates the contact angle as cosθ. The graph gives a linear relationship between the two parameters. The surface tension that gives cosθ = 1, or that is, contact angle = 0° is defined as the surface free energy of the solid analyzed according to the method. The surface tension of water is 72 mN/m, and it may be said that the samples having a larger value of surface free energy have a higher degree of hydrophilicity.

The hydrophilic layer having a degree of surface free energy, as measured according to the method, of from 70 mN/m to 95 mN/m, preferably from 72 mN/m to 93 mN/m, more preferably from 75 mN/m to 90 mN/m may have excellent hydrophilicity and have good properties.

When the transparent member coated with the hydrophilic film of the invention is used for windowpanes, its transparency is important for securing view through it. The hydrophilic film of the invention has excellent transparency, and even though it is thick, its transparency does not lower. Accordingly, the hydrophilic member of the invention may satisfy both transparency and durability.

The transparency of the member may be evaluated by measuring the light transmittance through it within a visible light range (400 nm to 800 nm), using a spectrophotometer. Preferably, the hydrophilic member has a light transmittance of from 70 % to 100 %, more preferably from 75 % to 95 %, most preferably from 80 % to 95 %. Within the range, the hydrophilic member coated with the hydrophilic film of the invention are applicable to various uses, not interfering with the view through it.

The hydrophilic film of the invention may be produced by applying the hydrophilic layer-forming coating liquid composition onto a suitable inorganic substrate and heating and drying it to form a surface hydrophilic layer thereon. Not specifically defined, the heating temperature and the heating time for forming the hydrophilic layer may be such that at which and within which the solvent is removed from the coating sol liquid to give a tough film. In view of the production aptitude, the heating temperature is preferably 150°C or lower, and the heating time is preferably within 1 hour.

### [Examples]

The invention is described in more detail with reference to the following Examples, to which, however, the invention should not be limited.

### [Example 1]

A float sheet glass (thickness 2 mm), most popular transparent sheet glass was prepared, and the surface of the sheet glass was hydrophilicated through glow treatment. Then, a hydrophilic layer-forming coating liquid having the following composition was applied onto it in a mode of bar-coating, and dried in an oven at 100°C for 10 minutes to form a hydrophilic layer having a dry coating amount of 0.1 g/m², thereby producing a hydrophilic member. The surface free energy of the hydrophilic member was 86 mN/m, and its surface had high hydrophilicity. The visible light transmittance of the hydrophilic layer was 95 % (measured with Hitachi Spectrophotometer U3000).

### <Hydrophilic layer-forming coating liquid (1)>

| | |
|---|---|
| Sol-gel liquid mentioned below | 500 g |
| Aqueous 5 mas% solution of anionic surfactant mentioned below | 30 g |
| Pure water | 450 g |

Anionic Surfactant (trade name, Aerosol OT, by Wako Pure Chemical Industries):

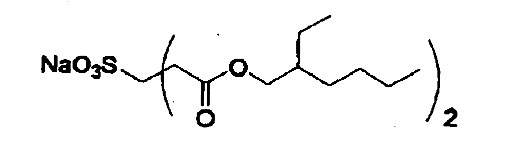

### <Sol-gel liquid>

8 g of tetramethoxysilane (by Tokyo Chemical Industry), 4 g of a silane coupling group-terminated hydrophilic polymer mentioned below and 1 g of a specific hydrophilic compound (Compound 1) were mixed in 200 g of ethyl alcohol, 10 g of acetylacetone, 10 g of tetraethyl orthotitanate and 100 g of pure water, and stirred at room temperature for 2 hours to prepare it.

### <Production of silane coupling group-terminated hydrophilic polymer>

25 g of acrylamide, 3.5 g of 3-mercaptopropyltrimethoxysilane, and 51.3 g of dimethylformamide were put into a three-neck flask, and heated up to 65°C in a nitrogen atmosphere, and then 0.25 g of 2,2'-azobis(2,4-dimethylvaleronitrile) was added to it to start the reaction. After stirred for 6 hours, this was restored to room temperature and put into 1.5 liters of ethyl acetate to give a solid deposit. Next, this was taken out through filtration, well washed with ethyl acetate and dried (yield 21 g). Through GPC (polyethylene oxide standard), this was identified as a polymer having a mass-average molecular weight of 4000. The viscosity of an aqueous 5 % solution of the polymer was 2.5 cPs, and the functional group density of the polymer was 13.4 meq/g. The log P value of the monomer, the constitutive unit of the above hydrophilic polymer was -0.61.

### (Evaluation)

The above hydrophilic member was evaluated as follows:

### Fogging resistance:

The hydrophilic member is put on a plastic cup filled with hot water at 80°C, and exposed to water vapor for 1 minute under a fluorescent lamp in a room in the daytime. After it is separated from water vapor, it is put in an environment at 25°C and 10 % RH, and then again exposed to the fluorescent lamp under the same condition as previously. Then, the sample is checked for fogging and change, and is organoleptically evaluated as in the following three ranks:
A: No fogging found.
B: Fogged but the fogging disappeared within 10 seconds, and no more fogging found thereafter.
C: Fogged, and the fogging did not disappear even after 10 seconds.

### Soiling resistance:

5 g of carbon black (FW-200 by Degussa) is suspended in 95 g of water to prepare a slurry, and this is uniformly and entirely sprayed over the surface of the hydrophilic member, and then dried at 60°C for 1 hour. The sample is rinsed with running water, rubbing with gauze, and then dried. Then, its transparency is measured to check whether carbon black has still adhered to it (using Hitachi Spectrophotometer U3000). The transmittance is computed according to JIS-R3106. Waterproofness:

Under a load of 1 kg applied thereto in water, a hydrophilic member sample having a size of 120 cm² is rubbed sponge, in a reciprocating motion repeatedly 10 times. Before and after the rubbing test, the coating film retentiveness is determined from the weight change of the sample.

### Scratch test:

The surface of the hydrophilic layer is scanned with a 0.1-mm diameter sapphire needle while the load applied thereto is varied, starting from 5 g, at regular intervals of 5 g; and the load under which the layer has come to be scratched is measured (with Shinto Science's Scratch Strength Tester Type 18S). This indicates the scratch resistance of the sample. Samples not scratched under a higher load have better durability.

### Storage stability (back blocking):

50 sheets of the hydrophilic member having a size of 5 cm x 5 cm are stacked up, and pressed under a torque of 300 kg, using a vise. Then, after aged in an environment at 45°C and 75 % humidity, the stacked sheets are checked for back blocking.

The test results are shown in Table 4. The fogging resistance and the soiling resistance of the hydrophilic member were good. The coating film retentiveness was 98 %, and the waterproofness of the hydrophilic member was good. No hydrophilicity reduction was found after the abrasion test; and in the scratch test, the hydrophilic member was not scratched under 50 g, and its durability was excellent. In the storage stability test, the hydrophilic layer did not cause back blocking, and the hydrophilic member had excellent storage stability.

### [Comparative Example 1]

A hydrophilic film was produced in the same manner as in Example 1, for which, however, the specific hydrophilic compound (Compound 1) was changed to methyltrimethoxysilane. The test results are shown in Table 4. The hydrophilicity was 65 mN/m as the surface energy; the fogging resistance was C; the soiling resistance was 60 %; the waterproofness was 98 % as the coating film retentiveness; and the scratch test gave no scratch under 50 g. The hydrophilicity was worse than in Example 1.

### [Examples 2 to 5]

Hydrophilic films were formed in the same manner as in Example 1, for which, however, the specific hydrophilic compound (Compound 1) was changed to the specific hydrophilic compound shown in Table 1. The test results are shown in Table 4.

**Table 1**

| | Specific Hydrophilic compound |
|---|---|
| Example 2 | Compound 4 |
| Example 3 | Compound 7 |
| Example 4 | Compound 14 |
| Example 5 | Compound 19 |

### [Example 6]

A float sheet glass (thickness 2 mm), most popular transparent sheet glass was prepared, and the surface of the sheet glass was hydrophilicated through glow treatment. Then, a hydrophilic layer-forming coating liquid having the following composition was applied onto it in a mode of bar-coating, and dried in an oven at 100°C for 10 minutes to form a hydrophilic layer having a dry coating amount of 0.1 g/m², thereby producing a hydrophilic member. Its test results are shown in Table 4.

### <Hydrophilic layer-forming coating liquid (2)>

| | |
|---|---|
| Aqueous 20 mas.% dispersion of colloidal silica (trade name, Snowtex C, by Nissan Chemical) | 100 g |
| Sol-gel liquid mentioned below | 500 g |
| Aqueous 5 mas% solution of anionic surfactant mentioned below | 30 g |
| Pure water | 450 g |

Anionic Surfactant (trade name, Aerosol OT, by Wako Pure Chemical Industries):

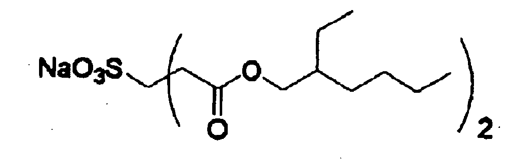

### <Sol-gel liquid>

8 g of tetramethoxysilane (by Tokyo Chemical Industry), 4 g of a silane coupling group-terminated hydrophilic polymer [(1-1) mentioned above] and 1 g of a specific hydrophilic compound (Compound 10) were mixed in 200 g of ethyl alcohol, 10 g of acetylacetone, 10 g of tetraethyl orthotitanate and 100 g of pure water, and stirred at room temperature for 2 hours to prepare it.

### [Examples 7 to 10, Comparative Example 2]

Hydrophilic films were formed in the same manner as in Example 6, for which, however, the specific hydrophilic compound (Compound 10) was changed to the specific hydrophilic compound shown in Table 2. The test results are shown in Table 4.

**Table 2**

| | Specific Hydrophilic compound |
|---|---|
| Example 7 | Compound 11 |
| Example 8 | Compound 20 |
| Example 9 | Compound 22 |
| Example 10 | Compound 25 |
| Comparative Example 2 | Sodium Butanesulfonate |

### [Examples 11 to 15]

Hydrophilic films were formed in the same manner as in Example 6, for which, however, the specific hydrophilic compound (Compound 10) was changed to the specific hydrophilic compound shown in Table 3 and the silane coupling group-terminated hydrophilic polymer was changed to the hydrophilic polymer shown in Table 3. The test results are shown in Table 4.

**Table 3**

| | Specific Hydrophilic compound | Hydrophilic Polymer |
|---|---|---|
| Example 11 | Compound 2 | (1-2) |
| Example 12 | Compound 6 | (1-5) |
| Example 13 | Compound 16 | (1-15) |
| Example 14 | Compound 21 | (1-17) |
| Example 15 | Compound 26 | (1-21) |

The log P value of the monomer, the constitutive unit of the hydrophilic polymer in Table 3 is shown below.
Hydrophilic polymer (1-2): -0.30
Hydrophilic polymer (1-5): -0.23
Hydrophilic polymer (1-15): -1.56
Hydrophilic polymer (1-17): -0.09
Hydrophilic polymer (1-21): -0.13

**Table 4**

| Example | Hydrophilic Surface Energy | Fogging Resistance | Soiling Resistance | Visible Light Transmittance | Waterproofness (coating film retentiveness) | Scratch Resistance | Storage Stability |
|---|---|---|---|---|---|---|---|
| Example 1 | 86 mN/m | A | 94 % | 95 % | 98 % | 50 g | good |
| Example 2 | 82 mN/m | A | 93 % | 94 % | 97 % | 60 g | good |
| Example 3 | 86 mN/m | A | 95 % | 95 % | 97 % | 50 g | good |
| Example 4 | 85 mN/m | A | 95 % | 95 % | 98 % | 50 g | good |
| Example 5 | 84 mN/m | A | 93 % | 94 % | 98 % | 60 g | good |
| Example 6 | 85 mN/m | A | 95 % | 95 % | 98 % | 60 g | good |
| Example 7 | 87 mN/m | A | 95 % | 95 % | 96 % | 50 g | good |
| Example 8 | 87 mN/m | A | 95 % | 95 % | 97 % | 50 g | good |
| Example 9 | 87 mN/m | A | 94 % | 94 % | 97 % | 50 g | good |
| Example 10 | 84 mN/m | A | 92 % | 93 % | 98 % | 60 g | good |
| Example 11 | 86 mN/m | A | 95 % | 95 % | 97 % | 50 g | good |
| Example 12 | 87 mN/m | A | 93 % | 94 % | 98 % | 50 g | good |
| Example 13 | 84 mN/m | A | 94 % | 95 % | 95 % | 45 g | good |
| Example 14 | 86 mN/m | A | 95 % | 95 % | 96 % | 60 g | good |
| Example 15 | 84 mN/m | A | 95 % | 95 % | 97 % | 60 g | good |
| Comparative Example 1 | 65 mN/m | C | 60 % | 93 % | 98 % | 50 g | good |
| Comparative Example 2 | 80 mN/m | B | 80 % | 88 % | 60 % | 20 g | sticky |

### [Example 16]

A float sheet glass (thickness 2 mm), most popular transparent sheet glass was prepared, and the surface of the sheet glass was hydrophilicated through glow treatment. Then, a hydrophilic layer-forming coating liquid having the following composition was applied onto it in a mode of bar-coating, and dried in an oven at 100°C for 10 minutes to form a hydrophilic layer having a dry coating amount of 0.1 g/m², thereby producing a hydrophilic member. The surface free energy of the hydrophilic member was 85 mN/m, and its surface had high hydrophilicity. The visible light transmittance of the hydrophilic layer was 95 % (measured with Hitachi Spectrophotometer U3000).

### <Hydrophilic layer-forming coating liquid (3)>

| | |
|---|---|
| Sol-gel liquid mentioned below | 500 g |
| Aqueous 5 mas% solution of anionic surfactant mentioned below | 30 g |
| Pure water | 450 g |

Anionic Surfactant (trade name, Aerosol OT, by Wako Pure Chemical Industries):

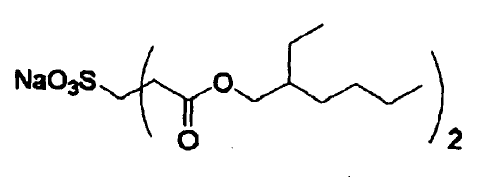

### <Sol-gel liquid>

8 g of tetramethoxysilane (by Tokyo Chemical Industry), 4 g of a silane coupling group-terminated hydrophilic polymer mentioned below and 1 g of a specific hydrophilic compound (Compound 27, Log P = -2.6) were mixed in 200 g of ethyl alcohol, 10 g of acetylacetone, 10 g of tetraethyl orthotitanate and 100 g of pure water, and stirred at room temperature for 2 hours to prepare it.

### <Production of silane coupling group-terminated hydrophilic polymer>

25 g of acrylamide, 3.5 g of 3-mercaptopropyltrimethoxysilane, and 51.3 g of dimethylformamide were put into a three-neck flask, and heated up to 65°C in a nitrogen atmosphere, and then 0.25 g of 2,2'-azobis(2,4-dimethylvaleronitrile) was added to it to start the reaction. After stirred for 6 hours, this was restored to room temperature and put into 1.5 liters of ethyl acetate to give a solid deposit. Next, this was taken out through filtration, well washed with ethyl acetate and dried (yield 21 g). Through GPC (polyethylene oxide standard), this was identified as a polymer having a mass-average molecular weight of 4000. The viscosity of an aqueous 5 % solution of the polymer was 2.5 cPs, and the functional group density of the polymer was 13:4 meq/g. The log P value of the monomer, the constitutive unit of the above hydrophilic polymer was -0.61.

The test results are shown in Table 8. The fogging resistance and the soiling resistance of the hydrophilic member were good. The coating film retentiveness was 98 %, and the waterproofness of the hydrophilic member was good. No hydrophilicity reduction was found after the abrasion test; and in the scratch test, the hydrophilic member was not scratched under 50 g, and its durability was excellent. In the storage stability test, the hydrophilic layer did not cause back blocking, and the hydrophilic member had excellent storage stability.

### [Comparative Example 3]

A hydrophilic film was produced in the same manner as in Example 16, for which, however, the specific hydrophilic compound (Compound 27) was changed to 1-decanol (Log P = 4). The test results are shown in Table 8. The hydrophilicity was 63 mN/m as the surface energy; the fogging resistance was C; the soiling resistance was 60 %; the waterproofness was 98 % as the coating film retentiveness; and the scratch test gave no scratch under 50 g. The hydrophilicity was worse than in Example 16.

### [Examples 17 to 20]

Hydrophilic films were formed in the same manner as in Example 16, for which, however, the specific hydrophilic compound (Compound 27) was changed to the specific hydrophilic compound shown in Table 5. The test results are shown in Table 8.

**Table 5**

| | Specific Hydrophilic Compound | Log P |
|---|---|---|
| Example 17 | Compound 29 | -4.73 |
| Example 18 | Compound 30 | -5.81 |
| Example 19 | Compound 38 | -0.69 |
| Example 20 | Compound 54 | 0.75 |

### [Example 21]

A float sheet glass (thickness 2 mm), most popular transparent sheet glass was prepared, and the surface of the sheet glass was hydrophilicated through glow treatment. Then, a hydrophilic layer-forming coating liquid having the following composition was applied onto it in a mode of bar-coating, and dried in an oven at 100°C for 10 minutes to form a hydrophilic layer having a dry coating amount of 0.1 g/m², thereby producing a hydrophilic member. Its test results are shown in Table 8.

### <Hydrophilic layer-forming coating liquid (4)>

| | |
|---|---|
| Aqueous 20 mas.% dispersion of colloidal silica (trade name, Snowtex C, by Nissan Chemical) | 100 g |
| Sol-gel liquid mentioned below | 500 g |
| Aqueous 5 mas% solution of anionic surfactant mentioned below | 30 g |
| Pure water | 450 g |

Anionic Surfactant (trade name, Aerosol OT, by Wako Pure Chemical Industries):

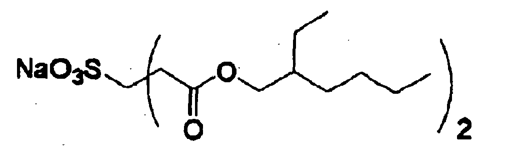

### <Sol-gel liquid>

8 g of tetramethoxysilane (by Tokyo Chemical Industry), 4 g of a silane coupling group-terminated hydrophilic polymer [(1-1) mentioned above] and 1 g of a specific hydrophilic compound (Compound 36, Log P = -4.09) were mixed in 200 g of ethyl alcohol, 10 g of acetylacetone, 10 g of tetraethyl orthotitanate and 100 g of pure water, and stirred at room temperature for 2 hours to prepare it.

### [Examples 22 to 25, Comparative Example 4]

Hydrophilic films were formed in the same manner as in Example 21, for which, however, the specific hydrophilic compound (Compound 36) was changed to the specific hydrophilic compound shown in Table 6. The test results are shown in Table 8.

**Table 6**

| | Specific Hydrophilic Compound | Log P |
|---|---|---|
| Example 22 | Compound 39 | -3.61 |
| Example 23 | Compound 49 | -0.48 |
| Example 24 | Compound 57 | -3.98 |
| Example 25 | Compound 60 | -1.69 |
| Comparative Example 4 | Butanesulfonic acid | -0.84 |

### [Examples 26 to 30]

Hydrophilic films were formed in the same manner as in Example 21, for which, however, the specific hydrophilic compound (Compound 36) was changed to the specific hydrophilic compound shown in Table 7 and the silane coupling group-terminated hydrophilic polymer was changed to the hydrophilic polymer shown in Table 7. The test results are shown in Table 8.

**Table 7**

| | Specific Hydrophilic Compound | Hydrophilic Polymer |
|---|---|---|
| Example 26 | Compound 28 | (1-2) |
| Example 27 | Compound 32 | (1-5) |
| Example 28 | Compound 42 | (1-15) |
| Example 29 | Compound 47 | (1-17) |
| Example 30 | Compound 52 | (1-21) |

The log P value of the monomer, the constitutive unit of the hydrophilic polymer in Table 7 is shown below.
Hydrophilic polymer (1-2): -0.30
Hydrophilic polymer (1-5): -0.23
Hydrophilic polymer (1-15): -1.56
Hydrophilic polymer (1-17): -0.09
Hydrophilic polymer (1-21): -0.13

The log P value of the specific hydrophilic compound in Table 3 is shown below.
Compound 28: Log P = -2.37
Compound 32: Log P = -1.94
Compound 42: Log P = -0.70
Compound 47: Log P = -0.83
Compound 52: Log P = -0.06

**Table 8**

| Example | Hydrophilic Surface Energy | Fogging Resistance | Soiling Resistance | Visible Light Transmittance | Waterproofness (coating film retentiveness) | Scratch Resistance | Storage Stability |
|---|---|---|---|---|---|---|---|
| Example 16 | 85 mN/m | A | 95 % | 95 % | 98 % | 50 g | good |
| Example 17 | 87 mN/m | A | 94 % | 94 % | 96 % | 50 g | good |
| Example 18 | 87 mN/m | A | 95 % | 95 % | 95 % | 50 g | good |
| Example 19 | 84 mN/m | A | 95 % | 95 % | 98 % | 60 g | good |
| Example 20 | 82 mN/m | A | 93 % | 94 % | 98 % | 60 g | good |
| Example 21 | 87 mN/m | A | 95 % | 95 % | 95 % | 50 g | good |
| Example 22 | 86 mN/m | A | 95 % | 95 % | 96 % | 50 g | good |
| Example 23 | 84 mN/m | A | 94 % | 95 % | 98 % | 60 g | good |
| Example 24 | 87 mN/m | A | 94 % | 94 % | 97 % | 50 g | good |
| Example 25 | 84 mN/m | A | 92 % | 93 % | 98 % | 60 g | good |
| Example 26 | 85 mN/m | A | 94 % | 95 % | 97 % | 50 g | good |
| Example 27 | 87 mN/m | A | 94 % | 94 % | 95 % | 50 g | good |
| Example 28 | 86 mN/m | A | 94 % | 95 % | 95 % | 45 g | good |
| Example 29 | 86 mN/m | A | 95 % | 95 % | 96 % | 60 g | good |
| Example 30 | 85 mN/m | A | 95 % | 95 % | 98 % | 60 g | good |
| Comparative Example 3 | 63 mN/m | C | 60 % | 93 % | 98% | 50 g | good |
| Comparative Example 4 | 79 mN/m | B | 79 % | 88 % | 55 % | 20 g | sticky |

According to the invention, there is provided a hydrophilic film forming composition capable of giving a surface hydrophilic layer having excellent hydrophilicity, having good durability and having excellent transparency and storage stability. Further, there is also provided a hydrophilic member having a hydrophilic film formed on the surface of a substrate, which is excellent in surface hydrophilicity and in its sustainability.

The entire disclosure of each and every foreign patent application from which the benefit of foreign priority has been claimed in the present application is incorporated herein by reference, as if fully set forth.

## Claims

1. A hydrophilic film forming composition comprising:
(A) a hydrophilic polymer comprising a silane coupling group at the terminal thereof;
(B) an alkoxide compound of an element selected from Si, Ti, Zr and Al; and
(C) a compound selected from a compound (C-1) and a compound (C-2),
wherein the compound (C-1) comprises at least one silane coupling group and at least one acidic group or its salt in the molecule thereof, and
the compound (C-2) comprises at least one functional group that reacts with a hydrolysate of a silane coupling group or with a hydrolytic condensate of a metal alkoxide and at least one acidic group or its salt in the molecule thereof.

2. The hydrophilic film forming composition according to claim 1,
wherein the compound (C-1) is represented by the following general formula (3): 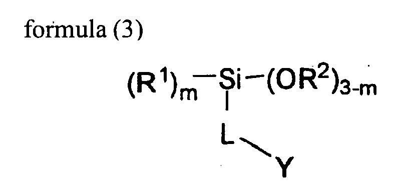 wherein R² represents a hydrogen atom, an alkyl group or an aryl group,
R¹ represents an alkyl group or an aryl group,
L represents a single bond or an organic linking group,
Y represents a sulfonic acid or its salt, a sulfinic acid or its salt, a sulfuric acid or its salt, a carboxylic acid or its salt, a phosphonic acid or its salt, or a phosphoric acid or its salt, and
m represents an integer of 0 or 1.

3. The hydrophilic film-forming composition according to claim 1,
wherein, in the compound (C-2), the functional group that reacts with a hydrolysate of a silane coupling group or with a hydrolytic condensate of a metal alkoxide is selected from the group consisting of a carboxylic acid anhydride group, an amino group, a hydroxyl group, an epoxy group, a methylol group, a mercapto group, an isocyanate group, and a blocked isocyanate group.

4. The hydrophilic film-forming composition according to claim 1,
wherein the compound (C-2) has a log P value of from -6 to 2, and
the acidic group in the compound (C-2) is selected from the group consisting of a carboxylic acid, a sulfonic acid, a phosphoric acid and a phosphonic acid.

5. The hydrophilic film forming composition according to claim 1,
wherein the hydrophilic polymer (A) comprises a polymer unit represented by the following formula (i) and a polymer unit represented by the following formula (ii), and comprises a silane coupling group represented by the following formula (iii) in at least one terminal of the hydrophilic polymer: 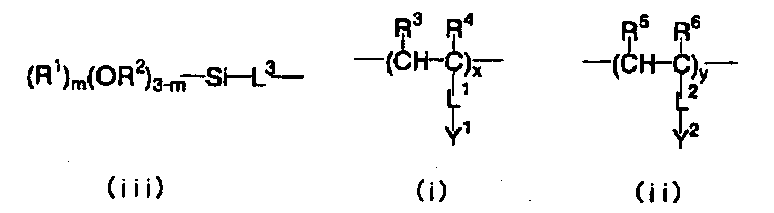 wherein R¹, R², R³, R⁴, R⁵ and R⁶ each independently represents a hydrogen atom or a hydrocarbon group having from 1 to 8 carbon atoms.
m represents 0, 1 or 2,
x and y represent a composition ratio when x + y = 100, and x : y is within a range of from 100 : 0 to 1 : 99,
L¹, L² and L³ each independently represents a single bond or an organic linking group, and
Y¹ and Y² each independently represents -N(R⁷)(R⁸), -OH, -NHCOR⁷, -CONH₂, -CON(R⁷)(R⁸), -COR⁷, -CO₂M or -SO₃M,
wherein R⁷ and R⁸ each independently represents a hydrogen atom or an alkyl group having from 1 to 8 carbon atoms, and
M represents a hydrogen atom, an alkali metal, an alkaline earth metal, or an onium.

6. The hydrophilic film forming composition according to claim 1, further comprising:
(D) a colloidal silica.

7. A hydrophilic member coated with the hydrophilic film forming composition according to claim 1.

8. The hydrophilic member according to claim 7, which is formed by hydrolysis and polycondensation of the compounds contained in the hydrophilic film forming composition.
